# EUROPEAN PATENT SPECIFICATION

(11) **EP 1 244 262 B1**
(45) Date of publication and mention of the grant of the patent: **11.05.2005**
(21) Application number: 01106462.3
(22) Date of filing: 23.03.2001
(51) Int. Cl.: H04L 29/06, H04L 29/12, G06F 9/46

(54) **Redirection of client requests**
Client- Abfragenumlenkung
Redirection de requêtes client

(43) Date of publication of application: 25.09.2002
(73) Proprietor: Sun Microsystems, Inc., Palo Alto, California 94303 (US)
(72) Inventor: Eilers, Bernd, 21107 Hamburg (DE); Laux, Thorsten O., 20099 Hamburg (DE)
(74) Representative: HOFFMANN - EITLE

(56) References cited:
- WO-A-00/19316
- WO-A-98/04985
- WO-A-99/40514
- MOURAD A ET AL: "SCALABLE WEB SERVER ARCHITECTURES" PROCEEDINGS IEEE INTERNATIONAL SYMPOSIUM ON COMPUTERS AND COMMUNICATIONS, XX, XX, 1 July 1997 (1997-07-01), pages 12-16, XP000199852

## Description

### Field of the Invention

The present invention relates to redirecting client requests in a client and server system.

### Background Art

Today's communication networks allow a user at any location to quickly access virtually any kind of information or service throughout the world, including for example viewing and retrieving information, buying a product, or accessing a user account for example for setting personal data or similar.

Generally, to access a service, a user operating a client unit connects to a network and selects a service or a server for providing the service. The client may connect to the server via any kind of communication link, including computer networks such as local area networks, wide area networks, or dedicated communication links, including wireless links.

After establishing a connection, a user operating the client unit may then control the execution of an application at the server unit in order to obtain the desired service. Parts of the application to provide the requested service may reside on the client unit, other parts of the application may be located at the server unit. The above applications may, for example, include office applications such as managing documents and data files, may include visualizing information, banking services, shopping services and similar.

As it is desired that client units, such as home computers, laptop computers, mobile devices including mobile phones, personal data organizers or similar, be reduced in size and weight, a recent trend in the art is to move more and more parts of an application as outlined above from the client unit to the server unit. Most importantly, computationally intensive parts of an application may be moved from the client unit to the server unit, while maintaining a control of the execution of the application through the client unit.

For example, in an office application such as editing a large document, or a session involving a plurality of linked documents, a client unit may have not sufficient resources for intermediately storing the required large amounts of data and/or to perform the necessary editing operations without introducing an unacceptable latency, i.e. time lag between entering a command and a corresponding response.

In this situation it may be preferred to allocate functions such as intermediately storing data and/or performing the required processing commands in editing a document to the server unit having large resources. Only functions for visualizing processing results may suitably be maintained at the client unit, such that a user may supervise and control any processing operations. Operations at the server unit may be controlled through the client unit by transmitting corresponding control commands, inputted by a user, from the client unit to the server unit.

Control commands for controlling an application at the server unit may be constituted by requests including information such as a specification of a requested resource, a task type, for example for specifying whether data is to be retrieved or to be received, optionally data content.

The request may be used to instruct the server unit to perform certain operations such as processing data, editing data, retrieving data, storing data, and similar. Corresponding processing operations will then be executed at the server unit and a processing result, if necessary, will be returned to the client unit, for example for local display.

However, with the applications as outlined above becoming more complex, an application may subdivided into a plurality of application modules, the application modules cooperating in serving user requests. Further, more than one application may be involved in serving a user request.

Therefore, it may occur, that a client request from a client unit is received at a server unit at a particular application module of an application which is not or not alone responsible for serving the received request. In this case it may be desirable to redirect the client request to another application module or application located at the same server unit or located at another server unit.

A straightforward approach for redirecting a client request could be to notify the client unit that the particular application or application module is not responsible for serving. In this case the client unit may itself redirect the request to another suitable application or application module.

However, a communication bandwidth of the communication link between the client unit and the server unit may be limited, e.g. due to using a low bandwidth wireless connection, a low bandwidth fixed connection or any other connection having low bandwidth. In these cases, notifying the client to redirect the client request to another suitable application or application module at the same server unit or another server unit may create an unacceptable communication load and latency, in particular if a large number of such redirections occur.

Patent application WO 00/19316 (INFOLIBRIA INC), published 6 April 2000, discloses a technique involving sending, in response to an initial service request that requests a service provided by a primary server node, a mobile agent from the primary server node to an intermediate node. The mobile agent indicates to the intermediate node that a secondary server node is capable of providing the service. Additionally, the technique involves intercepting, at the intermediate node, a subsequent service request sent from a client node to the primary server node, the subsequent service request requesting the service, and sending an instruction from the intermediate node to the secondary server node. The instruction instructs the secondary server node to provide the service.

### Summary of the Invention

It is therefore desirable to provide for redirecting client requests while maintaining a high overall performance in executing an application involving a client unit and applications at at least one server unit.

According to an embodiment a method for redirecting client requests at a server unit includes: receiving a client request at a first application module; generating a first redirection instruction based on the client request; transmitting the first redirection instruction to instruct a request handler to transmit the client request to a second application module for serving the client request.

The invention advantageously allows to redirect client requests from the client unit to an application module at a server unit by utilizing a request handler, thus avoiding an increase of a communication load between the client unit and the server unit due to the redirection of client requests. The client request is not redirected through the client unit to the second application module for serving the client request, as in the prior art, but redirected through the request handler based on the redirection instruction.

Further, the first application module may determine the second application module for serving the client request, e.g., based on a list of available application modules and may add to the redirection instruction at least address information of the second application module for serving the client request.

The client request issued by the client unit may be received at the first application module through the request handler, the request handler forwarding the client request from the client unit to the first application module and the redirection instruction may include information specifying that the request handler is selected for redirecting the client request to the second application module.

Thus, the request handler is placed in the communication path between the client unit and the server unit and handles the redirection instruction involving redirecting the client request to the second application module in order to maintain a low communication load between the client unit and the request handler and server unit, as this connection potentially has a low bandwidth.

The client request may include an internal resource locator previously transmitted from the first application module to the client unit and specifying a requested resource, the internal resource locator being valid in a communication between the first application module and the client unit.

By defining internal resource locators, e.g. in a communication session between the client unit and the server unit through the request handler, potentially long external resource locators may be converted into shorter internal resource locators, which allows to further save bandwidth on the potentially low bandwidth connection between the client unit and the request handler/server unit.

Generating the first redirection instruction may include obtaining an external resource locator based on the internal resource locator, the external resource locator allowing the second application module to access the resource, and generating the first redirection instruction may include including the external resource locator into the first redirection instruction.

As the internal resource locator, used in a communication session between the first application module and the client unit, is generally not known at the second application module, the internal resource locator is advantageously transformed into an external resource locator, the external resource locator constituting a resource locator understood by the second application module. For example, the external resource locator may be composed according to a communication protocol agreed upon in communications between the client unit and the application modules.

Generating the first redirection instruction may include a look-up operation in a resource locator table associating internal resource locators and external resource locators at least used by the second application module, the internal resource locator constituting an address for indexing into the resource locator table to identify the second resource locator.

Accordingly, in a communication session between the client unit and the first application module external, i.e. long, resource locators may be stored in a resource locator table and internal resource locators may be constituted by addresses specifying the corresponding external resource locators. Thus, potentially very short internal resource locators may be used in a communication between the client unit and the first application module, further saving bandwidth on the potentially low bandwidth connection between the client unit and the request handler/server unit.

The redirection instruction may be used to instruct the request handler to modify the client request based on information included in the redirection instruction.

Preferably, the internal resource locator included in the original client request may be replaced by the retrieved external resource locator corresponding to the internal resource locator of the client request and/or address information of the second application module may be included into the client request to be transmitted to the second application module.

Thus, a suitably modified client request is redirected to the second application module by the request handler, the modified client request preferably including an external resource locator corresponding to the original internal resource locator and/or address information of the second application module.

The first redirection instruction may be generated based on a first part of the client request, and a second part of the client request may be served by the first application module. For example, this may include generating a response for transmission from the first application module to the client unit through the request handler.

Accordingly, a client request may be partially served at the first application module and be partially served at the second application module. The first redirection instruction may include an external resource locator determined by the first application module, and specifying a resource needed for completing the client request, this resource being provided by the second application module.

Further, a third application module for serving a third part of the client request may be determined at the first application module and a second redirection instruction may be generated based on the third part of the client request. The second redirection instruction may then be transmitted to the request handler, instructing the request handler to transmit a modified client request to the third application module.

Thus, a client request may be further split up into parts for service at a third application module involving a further redirection of the client request. The original client request may thus be suitably divided into parts for service at the first application module, the second application module and the third application module.

The first and second application module may be executed on a single server unit.

Alternatively, the first application module may be executed at a first server unit and the second application module may be executed at a second server unit, e.g. remote from the first server unit, and the request handler may be constituted by a data processing device at least further including functions of a load balancer.

Thus, a redirection of client requests may involve application modules, e.g. part of a single application, executed at one or a plurality of server units. Further, the request handler may include further functions such as functions of a load balancer balancing requests from a plurality of clients onto a plurality of server units.

According to another embodiment, a method for redirecting client requests at a request handler includes receiving at the request handler a client request from a client unit; forwarding the client request to a first application module; receiving a first redirection instruction from the first application module based on the client request; and forwarding the client request to a second application module.

Thus, the request handler may suitably transmit requests in a communication session between a client unit and a server unit, including forwarding client requests to application modules and redirecting client requests based on redirection instructions to other application modules.

The method may include forwarding a response to the first redirection request from the second application module to the client unit.

The first redirection instruction may include address information of the second application module and information specifying that the request handler is selected for transmitting the first redirection instruction to the second application module.

The client request may include an internal resource locator previously transmitted from the first application module to the client unit and specifying a requested resource, the internal resource locator being valid in a communication between the first application module and the client unit.

The first redirection instruction may include an external resource locator associated with the internal resource locator, the external resource locator allowing the second application module to access the resource.

The request handler may intermediately save and may modify the client request based on information included in the redirection instruction.

The modification of the client request may include at least one of replacing the internal resource locator by the external resource locator; and including the address information of the second application module into the client request.

The first redirection request may be associated with a first part of the client request, and a second part of the client request is served by the first application module by transmitting a response to the client unit through the request handler.

The method may further include receiving a third redirection request based on a third part of the client request; and transmitting the third redirection request to a third application module for serving the third redirection request.

Further, the method may include determining a second application module for serving the client request, if the first application module and the second application module do not form part of a same application.

The request handler may communicate with a server unit executing the first and second application module.

Further, the request handler may communicate with a first server unit executing the first application module and with a second server unit executing the second application module.

A plurality of request handlers may be provided, wherein each request handler further executes functions of a load balancer.

Further, the client request issued by the client unit may include a plurality of internal resource locators and/or a plurality of external resource locators.

Thus, a single request may be used for instructing a plurality of operations at a plurality of application modules at one or a plurality of server units. Internal resource locators may be converted into external resource locators, if necessary, external resource locators included in the client request may be directly served. The client request may be suitably redirected to target application modules, as required.

The application modules may be constituted by Java servlets and the second resource locator may include a uniform resource locator, e.g. as used in the HTTP (Hyper Text Transport Protocol).

Further, a program may include instructions adapted to carry out one or a plurality of the above operations. A computer readable medium may be provided, in which a program is embodied, where the program is to make a computer execute one or a plurality of the above operations. A computer program product may comprise the computer readable medium.

According to another embodiment a server unit for redirecting client requests includes: a first application module includes application module receiving means to receive a client request; application module redirection means to generate a first redirection instruction based on the client request; and application module transmission means to transmit the first redirection instruction to a request handler, instructing the request handler to transmit the client request to a second application module for serving the client request.

According to another embodiment a request handler for redirecting client requests includes: request handler receiving means to receive a client request from a client unit; request handler transmission means to forward the client request to a first application module; wherein the request handler receiving means is adapted to receive a first redirection instruction from the first application module; and the request handler transmission means is adapted to forward the client request to a second application module.

Further advantageous embodiments of the invention are outlined in further claims.

### Brief Description of the Drawings

The invention may be better understood if the following description is taken together with the accompanying drawings, outlining embodiments of the invention. It is noted that the following description and drawings constitute examples only and should not be understood as limiting the invention.
- Fig. 1: shows a communications system according to an embodiment of the invention;
- Fig. 2: shows steps of a method for redirecting client requests at a server unit and a request handler according to an embodiment of the invention;
- Fig. 3: shows steps of a method for redirecting client requests at a server unit and a request handler according to an embodiment of the invention;
- Fig. 4: outlines operations for redirecting client requests at an application module according to another embodiment of the invention;
- Fig. 5: shows a system for redirecting client requests according to another embodiment of the invention;
- Fig. 6: shows steps of a method for redirecting client requests involving a primary application module, a secondary application module, a client unit and a request handler according to another embodiment of the invention;
- Fig. 7: shows a time sequence of steps for redirecting client requests according to another embodiment of the invention;
- Fig. 8: shows a time sequence of steps for redirecting client requests according to another embodiment of the invention;
- Fig. 9: shows elements of a system for redirecting client requests involving a request handler and two applications, each including application modules, according to another embodiment of the invention; and
- Fig. 10: shows operations of a method at a request handler according to another embodiment of the invention.

In the figures corresponding reference numerals denote corresponding elements. Further, the first one or two digits of a reference numeral indicate the figure the respective element first appeared.

### Detailed Description of the Preferred Embodiments

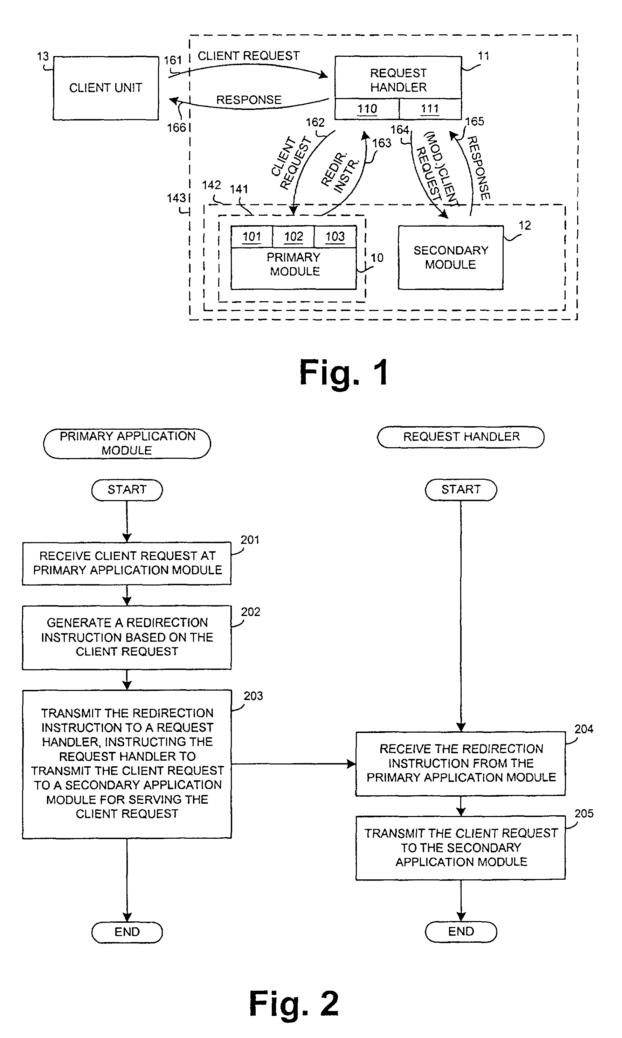

A first embodiment of the invention will be described with respect to Fig. 1.

Fig. 1 shows a system for redirecting client requests received from a client unit at an application module being executed at a server unit.

Fig. 1 illustrates a primary application module 10, a request handler 11, a secondary application module 12 and a client 13. Further, Fig. 1 illustrates a server unit 141 which includes the primary application module 10. Optionally, a server unit 142 may be provided which includes the primary application module 10 and the secondary application module 12, or, a server unit 143 may be provided which includes the primary application module 10, the request handler 11 and the secondary application module 12.

The client unit is connected to the request handler via an external communication link, such as a network connection, and/or a connection via a dedicated communication line and/or including wireless communications. The communication link between the client unit and the request handler may have low bandwidth.

The primary application module includes application module receiving means 101 to receive a client request from the client 13, e.g. in a communication session between the serve unit and the client unit for providing a particular service to a user operating the client unit. Further, the primary application module includes application module redirection means 102 to generate a first redirection instruction based on the client request received from the client unit 13 and, the primary application module includes application module transmission means 103 to transmit the first redirection instruction to the request handler 11, instructing the request handler 11 to transmit the client request to a secondary application module for serving the client request.

The request handler 11 for redirecting the client request includes request handler receiving means 110 to receive the client request from the client unit 13. The request handler receiving means 110 is adapted to receive a redirection instruction from the primary application module. Further, the request handler 11 includes request handler transmission means 111 to forward the client request to the primary application module. The request handler transmission means 111 is adapted to forward the client request to the secondary application module 12 upon receiving the first redirection instruction from the primary application module 10.

The individual elements in Fig. 1 are connected via internal connections or via external communication links, including networks, dedicated communication lines and wireless communications.

The above described system may be used to execute an arbitrary application involving the client unit and the application modules. Operations carried out at the primary application module may be suitably controlled through the client unit, e.g. by a user operating the client unit.

If the primary application module determines that another application module such as the secondary application module 12 should handle at least part of the client request from the client unit 13 to the primary application module 10, the necessary redirections of the client request is handled by the request handler 11.

Since a communication link between the client unit 13 and the request handler 11 may have a low bandwidth, redirections are advantageously handled by the request handler 11, avoiding additional communication load on the connection between the client unit 13 and the request handler 11 in redirecting client requests.

In the following operations of the system shown in Fig. 1 will be outlined. It is assumed that the client unit and the primary application module at a server unit, such as one of the server units 141, 142 or 143 have initialized a communication session for providing a service to a user.

The client unit 13 initially generates a client request and transmits same to the request handler 11, as indicated by an arrow 161. The request, as outlined above, may be generated by a user operating the client unit in order to obtain a particular service from a remote location.

The request handler 11 forwards the client request to the primary application module 10, as indicated by an arrow 162.

It is noted that the client unit 13 may alternatively directly transmit the client request to the primary application module 10, circumventing the request handler 11.

If the primary application module 10 in serving the client request determines that another application module, e.g., in the present example, the secondary application module 12, should handle at least part of the client request, the primary application module 10 generates a redirection instruction and transmits same to the request handler 11, as indicated by an arrow 163.

Upon receiving the redirection instruction the request handler, e.g. based on information included in the redirection instruction or upon a selection performed at the request handler, forwards the client request to the secondary application module 12, as indicated by an arrow 164.

The secondary application module 12, being responsible for serving the client request, generates a suitable response and returns the response to the request handler, as indicated by an arrow 165.

The request handler 11 then forwards the response from the secondary application module 12 to the client unit 13, as indicated by an arrow 166, where the response may be suitably handled. For example, information included in the request may be displayed on a display unit, stored, further processed or similar.

Even though in the shown embodiment only two application modules are illustrated, a plurality of application modules will preferably be present. Further, a plurality of client units may be connected to the request handler. Still further, as indicated above, the application modules may reside on a single server unit, e.g. server unit 142 of Fig. 1, or may be distributed onto a plurality of server units. Still further, the request handler 11 may be part of a server unit, e.g. server unit 143, or be constituted by a dedicated processing device.

In the following, examples of the individual elements shown in Fig. 1 will be outlined in further detail. It is noted that the following examples serve illustration purposes only and do not limit the invention. Modifications of the elements shown in Fig. 1 within the scope of the invention will readily occur to the person skilled in the art.

The client unit 13 shown in Fig. 1 may be a general purpose data processing device, such as a personal computer, a mobile terminal such as a mobile computing device, a mobile phone or a mobile data organizer operated by a user wishing to access a service remote from the client unit 13 e.g. provided by the primary application module 10. The client unit 13 may include a central data processing unit or may be connected to a data processing unit external to the client unit. The client unit may further include program storage means (not shown) for storing elements of an application to be executed involving the client unit and the application modules. The program storage means may be located within the client unit or external thereto.

An application executed involving the client unit and the application modules may for example involve an editing of data files, rendering of data such as to adapt content for the display of web pages, may correspond to mathematical or logical operations on contents of a data file, may relate to home banking applications, office applications such as spread sheet applications, drawing applications, e-mail applications or similar. An application may also relate to simply visualizing data, such as a text document, an image file, video data or may relate to reproducing audio or audio visual information.

The primary application module 10 may be a program executed at a processing unit. It is also possible that the primary application module is realized in hardware providing predefined services. The primary application module preferably provides computationally expensive services in executing one of the above outlined applications, for example rendering operations or similar.

The application module receiving means 101 may be a receiver suitably connected to a communication link to the client unit, e.g. defined by a an address and a port number. Similarly, the application module transmission means 103 may be a transmitter suitably connected to a communication link to the client unit. The application module redirection means 102 may be a computing unit for performing the required computations in determining whether a further application module should be involved in serving the client request. The application redirection means 102 may be provided for reaching the basic decision on the necessity of a redirection. Alternatively, the application redirection means 102 may also select a specific secondary application module from a group of secondary application modules.

Similar to the primary application module itself, the application module receiving means 101, the application module redirection means 102 and the application module transmission means 103 may be realized as a programs or may be realized by a dedicated hardware device. Further, the application module receiving means 101, the application module redirection means 102 and the application module transmission means 103 may form part of the primary application module 10.

It is also possible that the functions of the primary application module and the elements of the primary application module outlined above are realized by a server unit such as the server units 141, 142 and 143.

The secondary application module 12 may have a similar constitution as the primary application module 10, providing services in executing one of the above outlined applications. The secondary application module may be a program executed at a processing unit or may be realized in hardware providing predefined services. The primary application module preferably provides computationally intensive services in executing one of the above outlined applications, for example rendering operations or similar. The functions of the secondary application module may be realized by a server unit such as the server units 142 and 143.

For example, the primary application module 10 and the secondary application module 12 could form part of an application for editing a document. The primary application module could assume functions in retrieving a corresponding document, while the secondary application module could provide rendering operations, e.g. for providing information in a data format available at the client unit.

The primary application module 10 and the secondary application module 12 are preferably adapted to provide services to a large number of client units, either sequentially or simultaneously.

The request handler 11 may be constituted by an application program providing the above outlined functionality of the request handler 11, or, the request handler may be realized as a dedicated hardware device. The functionalities of the request handler may also be realized by a server unit such as the server 143 of Fig. 1. Preferably, the request handler is adapted to communicate with a large number of client units and with a large number of application modules, e.g. residing on one or a plurality of server units.

The request handler receiving means 110 and the request handler transmission means 111 may also be constituted by programs providing the above outlined functionality of the request handler receiving means and the request handler transmission means, executed on a general purpose data processing device or a dedicated data processing device.

The request handler receiving means 110 may be a receiver suitably connected to a communication link to the client unit, e.g. defined by a an address and a port number. Similarly, the request handler transmission means 111 may be a transmitter suitably connected to a communication link to the client unit.

It is possible that the request handler receiving means 110 and the request handler transmission means 111 are realized as separate units, e.g., a receiver and a transmitter, connected to the request handler 11.

As outlined above, the primary application module 10 and the secondary application module 12 and the request handler 11 may reside on separate units or on a single server unit such as server unit 143. In this case, functionality of the request handler and the application modules may be assumed by a central data processing unit of the server unit or by separate processing devices of the server unit 143.

Further, only the primary application module and the secondary application module may reside on a server unit such as server unit 142 shown in Fig. 1, while the request handler is constituted by a separate device. In this connection communications between the application modules and the request handler may be performed through a communications network such as a local area network or a wide area network or may include dedicated communication links and may include wireless communications.

Still further, it is possible that the application modules reside on different server units, each server unit at least hosting one application unit.

A server unit such as server unit 141, 142 and 143 may be constituted by a general purpose data processing unit, preferably a data processing unit with large resources, e.g. high processing capabilities and large memories for storing large amounts of data. The server unit 141, 142 and 143 may be a single unit or may be a distributed system of a plurality of servers or data processing units and may be shared by multiple users operating a plurality of client units. Further, a plurality of request handlers may be provided.

In the present embodiment, as a redirection of requests is handled by the request handler 11, an increased communication load due to a redirection of client requests via the potentially low bandwidth communication link between the client unit and the request handler/server unit can be avoided.

The invention advantageously allows to redirect client requests from the client unit to an application module at a server unit by utilizing a request handler, thus avoiding an increase of a communication load between the client unit and the server unit due to the redirection of client requests. The client request is not redirected through the client unit to the second application module for serving the client request, as in the prior art, but redirected through the request handler based on the redirection instruction.

Further, the client request issued by the client unit may be received at the first application module through the request handler, the request handler forwarding the client request from the client unit to the first application module. The redirection instruction may include information specifying that the request handler is selected for redirecting the client request to the second application module.

Thus, the request handler is placed in the communication path between the client unit and the server unit and handles the redirection instruction involving redirecting the client request to the second application module in order to maintain a low communication load between the client unit and the request handler and server unit, as this connection potentially has a low bandwidth.

Further, since the client unit does not directly communicate with the primary application module and secondary application module, the inventive arrangement is also suited to facilitate maintaining security.

Generally, the client unit is connected to the request handler via a publicly accessible network or communication link, e.g., the client unit may be used to dial into a network node and then to connect to the request handler. Accordingly, the communication link between the client unit and the request handler may be subject to unauthorized access. As opposed thereto, the request handler and the primary and secondary application module may preferably be located within a local area network, for example a local area network of a company operating the application modules and the request handler, and therefore these connections may be secured relatively easy.

Thus, as opposed to a prior art arrangement, where the client unit accesses both the primary application module and the secondary application module directly, requiring security provisions at the primary application module, the secondary application module and further application modules provided, the inventive arrangement only requires to provide security measures at the request handler, as the request handler is the only entity which is in direct contact to the client unit or units, i.e. to the outside world.

Thus, a secure system may be obtained at reduced efforts as in the prior art. For example, the request handler could be provided with the functionality of a fire-wall, restricting access to the primary and secondary application modules. A firewall generally is a method for keeping a network secure. It can for example be implemented in a router that filters out unwanted packets, or it may use a combination of technologies in routers and hosts. Firewalls may be used to give users access to public networks in a secure fashion as well as to separate a company's public Web server from its internal network. They may also be used to keep internal network segments secure. A firewall, as known in the art, may be a packet filter allowing passing of only selected packets, e.g. packets with a specific IP-address and/or a specific port number. Further, firewalls may perform certain processing operations on any packet received from the outside (or inside), before it is transmitted to the local area network side (or to the outside).

Further, only the internal resource locator used in the communication session between the client unit and the primary application module may be transmitted via the potentially insecure communication link between the request handler and the client unit. However, the internal resource locator is unknown but to the client unit and the primary application module, thus providing a further security measure. The external resource locator will only be transmitted within the local area network connecting the primary application module, the request handler and the secondary application module.

In the following a further embodiment of the invention will be described with respect to Fig. 2.

Fig. 2 illustrates operations of a method for redirecting client requests at an application module and a request handler according to another embodiment of the invention.

The operations illustrated in Fig. 2 may be carried out using the system shown in Fig. 1, however, Fig. 2 is not limited thereto.

On the left-hand side of Fig. 2 operations at a primary application module are illustrated and on the right-hand side of Fig. 2 operations carried out at a request handler are illustrated.

In a first operation 201 a client request is received at a primary application module, such as application module 10 of Fig. 1. The client request may be directly received from a client unit such as client unit 13, or may be indirectly received, for example through a request handler such as request handler 11 of Fig. 1, the request handler being connected to the client unit via a low bandwidth communication link.

The client request may preferably specify a desired resource, such as an operation in an application as outlined above, for example retrieving a document for editing, rendering a document and similar.

In an operation 202 the primary application module generates a redirection instruction based on the client request. The redirection instruction may for example be generated upon the primary application module analyzing the client request and determining that the primary application module is not responsible for serving the client request or that a further application module should be involved in serving the client request.

In an operation 203 the primary application module transmits the redirection instruction to the request handler, instructing the request handler to redirect the client request. For example, the request handler could be instructed to transmit the client request to a secondary application module for serving the client request, such as the secondary application module 12 illustrated in Fig. 1. At the request handler, in an operation 204 the redirection instruction is received from the primary application module. A communication between the request handler and the primary application module may be realized via internal connections, e.g. in server unit 141 of Fig. 1, or through external communication links, if the request handler and the primary application module reside on separate units.

Upon receiving the redirection instruction, in an operation 205 the request handler transmits the client request, if necessary suitably modified, e.g. in correspondence to the redirection instruction or further processing steps carried out at the request handler, to the secondary application module, such as the secondary application module 12 illustrated in Fig. 1.

Thereafter the flow of operations ends. Alternatively, further requests from the client unit may be served, either by the primary application module or, after redirection, at the secondary application module.

In the above embodiment, since the request handler is instructed with the redirection instruction from the primary application module to transmit the client request to a secondary application module for serving the client request, it can be avoided that the redirection of the client request is performed by the client unit, and therefore additional communication load on a communication link between the client unit and the request handler/primary application module will not be generated. The redirection of client requests may be performed using the request handler and communication links between the application modules and the request handler, which generally will be high bandwidth connections.

It is noted that the above described features and processing operations may be realized by dedicated hardware or may be realized as programs including code instructions executed on data processing units, e.g. server units as server unit 141, 142 and 143 and client units such as client unit 13. It is further possible that parts of the above sequences of operations are carried out in hardware, whereas others of the above processing operations are carried out using software.

It is further noted that a computer readable medium may be provided, having a program recorded thereon, where the program is to make a computer or system of data processing devices execute functions of the above described operations, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

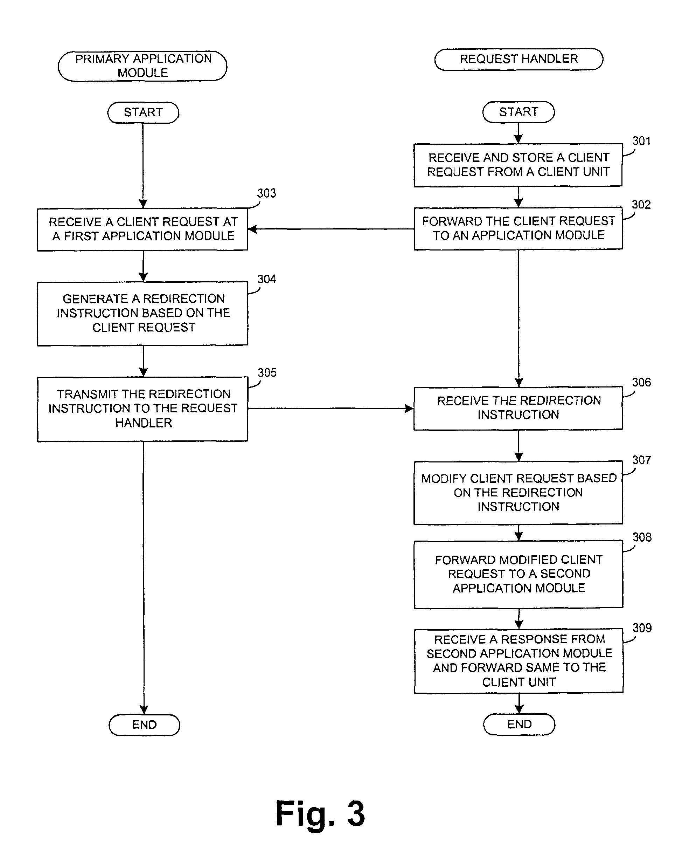

In the following a further embodiment of the invention will be described with respect to Fig. 3.

Fig. 3 shows operations of a method for redirecting client requests according to another embodiment of the invention.

The operations outlined with respect to Fig. 3 may be carried out using the system shown in Fig. 1, however, Fig. 3 is not limited thereto.

On the left-hand side of Fig. 3 operations carried out at an application module are illustrated, and on the right-hand side of Fig. 3 operations carried out at a request handler are illustrated.

In a first operation 301 at the request handler, such as the request handler 11 shown in Fig. 1, a client request from a client unit, such as client unit 13 of Fig. 1, is received and intermediately stored or buffered. The client unit may be connected to the request handler via an external communication link, such as a network connection, and/or a connection via a dedicated communication line and/or including wireless communications. The communication link between the client unit and the request handler may have low bandwidth.

As outlined before, the request from the client unit may specify a requested resource by comprising a resource identifier and a requested action such as receiving or providing data and similar. For example, the client request could be generated using a browser for browsing information on a communications network, such as a local area network or the Internet. In this case, a user may generate the request by e.g. clicking on a hyperlink on a display at the client unit, instructing the browser to generate a corresponding request. This may involve a request to display information, retrieve information, may include an instruction to start an application as outlined above, such as editing a document, spread sheet applications, mathematical operations and similar.

The client request may also specify an address of a device hosting the primary application module, such as the server unit 141, 142 and 143 illustrated in Fig. 1. The client request may also include information directly specifying the primary application module, such as the primary application module 10 illustrated in Fig. 1.

After receiving the client request and, if necessary, selecting or determining the target entity for the client request such as the primary application module, in an operation 302 the request handler forwards the client request to the primary application module.

Forwarding the client request may utilize internal connections, if the request handler and the application module reside on the same physical entity, or may include external communication links, e.g. via a network or dedicated communication links, as outlined above. In this case a further routing of the client request through further elements of a communication network (not shown) may be involved.

In an operation 303 the client request is received at the primary application module. The client request may for example be received at the application module receiving means 101 illustrated in Fig. 1.

In an operation 304 the primary application module generates a redirection instruction based on the client request, e.g., if the primary application module decides that it is not responsible for serving the request or if it decides that a further application module should be involved in serving the request.

The primary application module then transmits in an operation 305 the redirection instruction back to the request handler. As before in operation 302 this may involve internal connections or external communication links, if the application module and the request handler reside on different server units.

In an operation 306 the redirection instruction is received at the request handler.

Preferably, the redirection instruction includes information specifying that the request handler is selected for redirecting the client request to the second application module. This information, e.g. a flag, may be included a header field of the redirection instruction. Thus, the request handler may analyze the header of the request and based thereon proceed to redirect the client request.

After receiving the redirection instruction and, e.g., determining, that the request handler is responsible for redirection, the request handler may further analyze the redirection instruction, and, based on information of the redirection instruction may modify the client request in an operation 307.

The modification may involve including address information of the secondary application module into the client request, for example, as specified in the redirection instruction. Further, the request handler may further specify the requested resource of the client request, for example in a case where the primary application module decides to serve a first part of the client request. In this case the redirection instruction preferably specifies a second part of the client request to be served by the secondary application module, and the request handler correspondingly modifies the client request to specify the second part of the client request only. This may involve modifying a resource identifier included in the client request.

However, it is also possible that the redirection instruction only instructs the request handler to redirect the intermediately stored client request from the client unit, and leaves it up to the request handler to select the secondary application module, for example based on information of available application modules.

In an operation 308 the request handler forwards the modified client request to the selected secondary application module. The client request may be forwarded via internal connections, if the request handler and the application modules reside on the same server unit, or may be achieved involving external communication links, if the request handler and the secondary application module reside on different physical entities.

After receiving the client request, the secondary application module processes the request. This may involve performing functions in one of the applications outlined with respect to previous embodiments, such as retrieving data, rendering operations, and similar.

The secondary application module then generates a suitable response to the client request.

The response may include data to be transmitted to the client unit or may include a notification for the client unit that a specified request was served, e.g. by storing data, or performing further operations.

In an operation 309 the response from the secondary application module is received at the request handler and forwarded to the client unit.

In the above outlined embodiment the request handler channels all requests and responses in executing the application. The client unit only communicates with the request handler in transmitting client requests and receiving responses to client requests.

In case the primary application modules decides on serving a part of the client request, while redirecting for a second part of the client request, the request handler could forward responses from the primary application module and the secondary application module to the client unit.

As in the previous embodiments, since a redirection of client requests is performed by the request handler, a potentially low bandwidth connection between the client unit and the request handler is not subjected to further communication load due to the redirection of the client request.

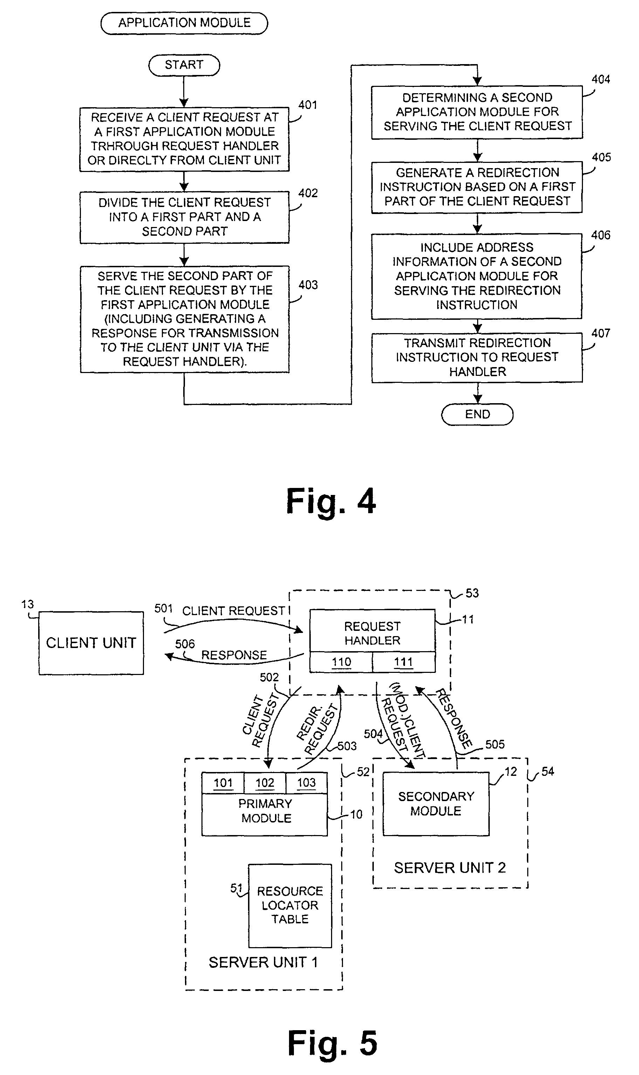

In the following a further embodiment of the invention will be described with respect to Fig. 4.

Fig. 4 shows a sequence of operations for redirecting client requests at an application module according to another embodiment of the invention. The operations of Fig. 4 may be carried out by the system shown in Fig. 1, however, Fig. 4 is not limited thereto.

The embodiment of Fig. 4 particularly outlines steps at a primary application module in serving a client request, such as the primary application module 10 of Fig. 1, including dividing the client request into different parts for service at the primary application module and a secondary application module, such as the secondary application module 12 of Fig. 1, and selecting a secondary application module.

In a first operation 401 a client request is received at the primary application module, e.g. through the request handler or directly from the client unit, as outlined with respect to previous embodiments.

In an operation 402 the primary application module analyzes the request and divides the request into a first part and a second part. The first part and the second part may be associated with different processing steps to be executed in connection with the client request, for example the first part of the client request could relate to retrieving a document for editing, and the second part could relate to editing the document or similar.

As an example, in the present embodiment it is assumed that the application module decides that the first part of the client request should be served at the secondary application module, whereas the second part of the client request can be served at the primary application module.

In accordance therewith, in an operation 403 the second part of the client request is served by the primary application module, which may include generating a response for transmission to the client unit. The response may be transmitted via a request handler, such as request handler 11 of Fig. 1.

Further, the primary application module in an operation 404 determines a secondary application module for serving the first part of the client request, for example as outlined before. For example, the primary application module may select the secondary application module based on a list of available application modules for serving the first part of the client request. If as the secondary application module a plurality of potential candidate modules are available, one of the modules could be selected, e.g. based on load balancing considerations for balancing the communication load in a network. A secondary application module located at the same server unit as the primary application module, or located close by, could be preferred.

Thus, the request handler may determine a secondary application module for serving the client request based on a list of available application modules, and may add to the redirection instruction address information of the second application module for serving the client request.

In an operation 405 the primary application module generates a redirection instruction based on the first part of the client request and, in an operation 406 includes address information of the secondary application module for serving the redirection instruction.

In an operation 407 the redirection instruction is transmitted to the request handler, which may, upon receiving the redirection instruction from the primary application module, if necessary, modify the client request as outlined before, and redirect the client request to the secondary application module for service, as also outlined with respect to previous embodiments.

The embodiment of Fig. 4 allows the primary application module to serve part of the client request, while another part of the client request is suitably redirected to a secondary application module.

The redirection instruction is generated based on a first part of the client request, and a second part of the client request is served by the primary application module, which may include generating a response for transmission to the client unit via the request handler. The redirection, as in the previous embodiments, involves the request handler and therefore allows to avoid further communication load on the potentially low bandwidth connection between the client unit and the request handler/application modules.

It is noted that in the embodiment of Fig. 4 not necessarily all operations are always needed. Examples are possible, where some operations are omitted. For example, if the entire request is to be redirected, operations 402 and 403 may be omitted. Further, if the selection of the secondary application module is to be performed at the request handler, operation 404 may be omitted.

Further, even though the operations of the current embodiment are shown in a particular sequence, the invention is not limited to the specific sequence shown. The person skilled in the art readily appreciates that some variations of the sequence of operation are possible without departing from the invention.

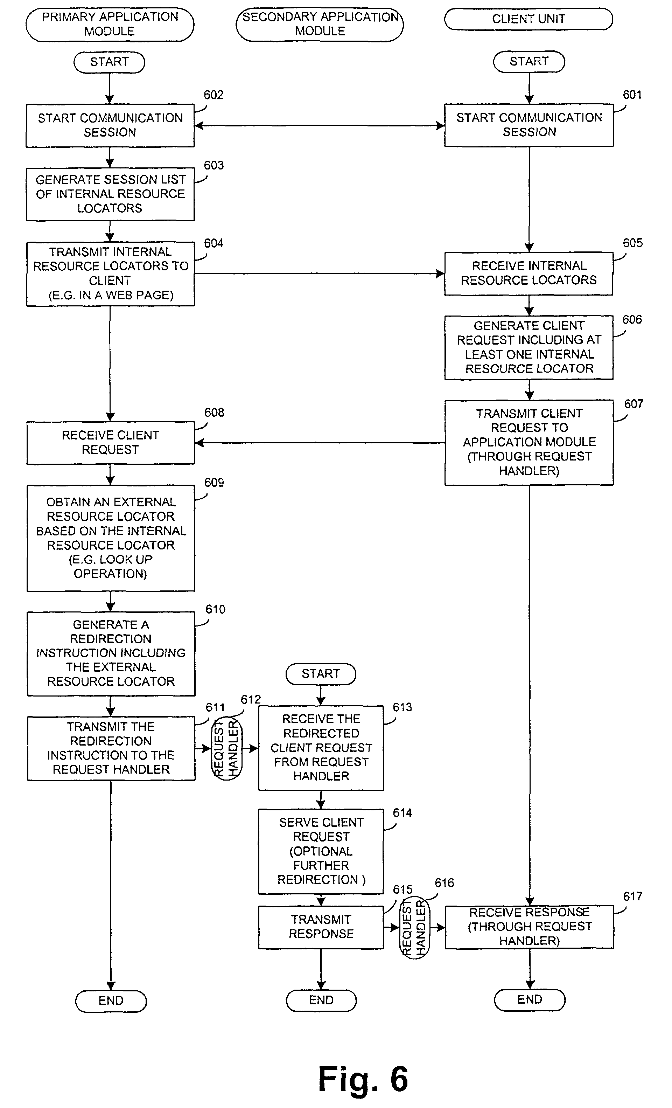

In the following a further embodiment of the invention will be described with respect to Fig. 5.

Fig. 5 shows a system for redirecting client requests according to a further embodiment of the invention.

The embodiment shown in Fig. 5 is similar to the embodiment shown in Fig. 1.

In addition to the element shown in Fig. 1, a resource locator table 51 is provided in association with the primary application module 10 is present.

Further, the primary application module 10 and the resource locator table 51 are shown as part of a first server 52.

Still further, the request handler 11 is shown as forming part of a data processing device 53, and the secondary application module 12 is shown as forming part of a second server unit 54.

Thus, the first and secondary application module and the request handler are each located on different physical entities and may be interlinked via communication networks or dedicated communication links as outlined above.

However, this is an example only, and, as outlined with respect to the embodiment of Fig. 1, the first and secondary application module 10 and 12 may reside on a single server unit. As a further alternative this single server unit may include the request handler 11.

Further, it is possible that the primary application module 10 and the request handler 11 or the secondary application module 12 and the request handler 11 reside on a single unit.

Elements with the same reference numerals as in Fig. 1 have the same functionality and for brevity reasons it is referred to the embodiment of Fig. 1 in connection with these elements. However, with respect to some elements further details are given in the following.

In the present embodiment the client unit 13 and the primary application module 10 are assumed to be involved in a communication session involving the request handler 11, the request handler for example forwarding client requests from the client unit to the primary application module and responses from the primary application module to the client. As outlined before, the client requests transmitted from the client unit to the primary application module may include resource locators specifying a resource at the primary application module such as an operation to be performed in retrieving a document, editing a document, performing rendering operations and similar.

Such a client request may be transmitted from the client unit to the request handler as indicated by an arrow 501. The client unit may be connected to the request handler via an external communication link, such as a network connection, and/or a connection via a dedicated communication line and/or including wireless communications. The communication link between the client unit and the request handler may have low bandwidth.

The client request is then transmitted from the request handler 11 to the primary application module 10 as indicated by an arrow 502.

As the communication link between the client unit and the request handler may have a low bandwidth, as outlined before, e.g. due to using a low bandwidth wireless connection, low bandwidth network connection or fixed communication link, it is desirable to maintain the requests as short as possible. Therefore, instead of transmitting full length resource locators, such as uniform resource locators used in the HTTP environment or resource locators used according to any other protocol, abbreviated resource locators may be used in the communication session between the client unit and the primary application module 10.

An external resource locator may, for example, be a Uniform Resource Locator (URL) or any other resource locator used to specify a resource in a communications network such as a local area network or a wide area network. A resource locator may specify an identifier of an entity of the network able to provide the requested resource, or may directly specify an address of a device such as a server. As external resource locators are preferably composed according to an agreement valid for all devices of a network, any device may understand, i.e. suitably handle, an external resource locator.

Thus, instead of transmitting externally known resource locators, i.e. external resource locators, from the client unit to the primary application module in client requests, the client unit and the primary application module in the shown embodiment agree on internal resource locators in correspondence to full length external resource locators. Accordingly, a client request will include an internal resource locator, specifying a resource available through the primary application module 10.

The primary application module may keep track of such corresponding internal resource locators and external resource locators in a resource locator table, such as the resource locator table 51 shown in Fig. 5. The resource locator table 51 may therefore include a list of external resource locators and corresponding internal resource locators used in the "private" communication session between the client unit 13 and the primary application module 10.

Accordingly, the client request includes an internal resource locator previously transmitted from the first application module to the client unit and specifying a requested resource, the internal resource locator being valid in a communication between the first application module and the client unit.

However, in this scenario, if the primary application module 10 determines that it is not or not alone responsible for serving a client request and decides to redirect at least part of the client request to a second communication module, the second communication module is not aware of which resource is linked to the internal resource locator used in the communication session between the client unit 13 and the primary application module 10.

Therefore, upon receiving a client request at the primary application module 10 including an internal resource locator and requiring a redirection through the request handler, the primary application module 10 obtains an external resource locator based on the received internal resource locator, the external resource locator preferably allowing the secondary application module to access the requested resource.

The primary application module 10 may therefore include into the redirection instruction the external resource locator corresponding to the internal resource locator received with the client request and will transmit the redirection instruction to the request handler as indicated by an arrow 503.

Preferably, the application module redirection means 102 may be adapted to obtain an external resource locator based on the internal resource locator, the external resource locator allowing the secondary application module to access the resource and to include the external resource locator into the redirection instruction.

The request handler 11, receiving the redirection instruction, will analyze the redirection instruction and replace in the client request received from the client 13 the internal resource locator by the external resource locator received with the redirection instruction.

Further, the request handler may modify the client request as outlined with respect to previous embodiments. The application module redirection means may be adapted to instruct the request handler to modify the client request based on information included in the redirection instruction.

Preferably, the application module redirection means may be adapted to instruct the request handler to replace the internal resource locator by the external resource locator and/or include address information of the second application module into the client request.

As indicated by an arrow 504 the request handler then transmits the modified client request to the secondary application module 12 for serving the request, as outlined with respect to previous embodiments.

The secondary application module 12 will prepare a response and transmit same to the request handler 11 as indicated by an arrow 505. The request handler 11 will forward the response to the client unit 13 as indicated by an arrow 506, for local display of information included in the response or further processing operations, as outlined with respect to previous embodiments.

As an alternative, it is also possible that if the primary application module 10 already serves part of the client request, that the primary application module 10 includes an external resource locator corresponding to a second part of the client request into the redirection instruction transmitted to the request handler 11 as indicated by arrow 503.

The resource locator table may be constituted by a storage device accessible through the primary application module, e.g. a memory of the first server 52. Alternatively, the resource locator table may be located on a separate device located remote from the primary application module and first server.

The embodiment outlined with respect to Fig. 5 allows to further reduce a communication load between the client unit and the request handler/application modules, as in the communication session between the client unit and the application module internal resource locators may be used, the internal resource locators having shorter length than external resource locators, e.g. uniform resource locators URL, used according to for example the HTTP protocol. It is noted that the invention is not limited to the HTTP protocol, the invention may be applied to any other protocol specifying resource locators.

In the following a further embodiment of the invention will be described with respect to Fig. 6.

Fig. 6 outlines operations for redirecting client requests according to another embodiment of the invention. In Fig. 6 operations at a primary application module, a secondary application module and a client unit are further outlined in detail. The operations illustrated in Fig. 6 may be executed using the system illustrated in Fig. 1 or Fig. 5, however, Fig. 6 is not limited thereto.

On the left-hand side of Fig. 1 operations are illustrated which are carried out at a primary application module such as the primary application module 10 shown in Fig. 1. In the middle column of Fig. 6 operations are illustrated, carried out at a secondary application module, such as the secondary application module 12 of Fig. 1 or 5. On the right-hand side of Fig. 6 operations at the client unit, such as client unit 13 of Fig. 1 or 5, are illustrated.

In a first operation 601 and an operation 602 a communication session is initialized between the primary application module and the client unit. Establishing a communication session may involve dialing into a network from the client unit and transmitting information between the primary application module and the client unit through a request handler, such as request handler 11 shown in Fig. 1 or 5. The communication session may be established by a user who wishes to obtain a service at a server unit remote from a client unit operated by the user.

The communication session may involve executing a browser application for browsing information on a computer network at the client unit. The communication session may include applications for editing a document, displaying information, spread sheet applications, rendering operations and similar, as outlined with respect to previous embodiments.

In an operation 603 the primary application module generates a session list of internal resource locators, e.g. internal resource locators which may be used during the communication session.

For example, it is conceivable that in a communication session a page for display at the client unit is to be prepared, the page including a plurality of links to resources, the links being specified by external resource locators, for example if a directory tree of a website is to be graphically displayed.

In this situation a list of internal resource locators could be created, each one internal resource locator corresponding to an external resource locator of the above links. For example, the external resource locators could be listed at locations specified by addresses, the addresses constituting internal resource locators.

Thereafter, in an operation 604 the session list of internal resource locators or some of the internal resource locators of the session list are transmitted to the client, for example in a page to be displayed at the client unit, e.g. a page visualizing a directory of a website. The internal resource locators may be transmitted in a web page, e.g. as used according to the HTTP protocol in a network environment.

The internal resource locators are received at the client unit in an operation 605, and may thereafter be used in the communication session with the primary application module for generating client requests. Since the internal resource locators are much shorter than external resource locators such as uniform resource locators URL as for example used in the HTTP environment, a communication load generated by client requests in the communication session between the primary application module and the client unit may be maintained low.

In an operation 606 the client unit generates a client request including at least one of the internal resource locators received from the primary application module. As outlined before, the request may for example be generated by a user clicking on a respective link in a web page or may be generated by any other means.

In an operation 607 the client request is transmitted to the primary application module through the request handler, such as request handler 11. The client request may thus include at least one of the internal resource locators previously transmitted from the first application module to the client unit and specifying a requested resource, the internal resource locator being valid in a communication between the first application module and the client unit.

As outlined with respect to previous embodiments, the request handler 11 may handle any communication between the primary application module and the client unit.

In an operation 608 the client request is received at the primary application module, preferably through the request handler.

Then, in an operation 609 an external resource locator is obtained based on the internal resource locator received with the client request, as outlined before. For example, in a lookup operation using the internal resource locator, the external resource locator corresponding to the internal resource locator could be identified.

Thus, the primary application module may obtain an external resource locator based on the internal resource locator, the external resource locator allowing the second application module to access the resource.

The application module redirection means may be adapted to perform the look-up operation in a resource locator table associating internal resource locators and external resource locators at least used by the secondary application module, the primary resource locator constituting an address for indexing into the resource locator table to identify the external resource locator.

The internal resource locator may constitute an address for indexing into a list of external resource locators to identify the external resource locator corresponding to the internal resource locator. Further, as outlined before, obtaining the external resource locator may not necessarily be a one to one translation of an internal resource locator received with a client request, particularly in cases where the primary application module already serves part of the client request, the external resource locator, in this case corresponding to a part of the client request, could be suitably selected.

In an operation 610 a redirection instruction is generated at the primary application module including the external resource locator identified in operation 609. Further, the redirection instruction may include information on a secondary application module, if the secondary application module is already selected at the primary application module.

In an operation 611 the redirection instruction is transmitted to the request handler. At the request handler, if the secondary application module is not already selected at the primary application module, and information on the secondary application module is not included in the redirection instruction, the request handler selects a secondary application module, e.g. from a list of available secondary application modules for serving the client request, in an operation 612. The request handler then redirects the, if necessary suitably modified, client request to the secondary application module, where it is received in an operation 613.

In an operation 614 the client request is served at the secondary application module, as outlined before. Further, serving the client request may included a further redirection according to the above scheme, if the secondary application module determines that a further application module should serve the client request.

In an operation 615 a suitable response, as outlined before, is transmitted to the request handler which forwards the response in an operation 616 to the client unit. In an operation 617 the response is received at the client unit, as outlined before. This may include visualizing information received in the response, or may include further processing and similar. Thereafter the flow of operation ends.

The embodiment outlined with respect to Fig. 6 allows to further reduce a communication load on a potentially low bandwidth communication link between the client unit and the request handler/application modules, as in a communication session abbreviated resource locators are used, and additionally thereto a redirection of client requests at a request handler is possible, since external resource locators are included into the redirection instructions from the primary application module to the request handler.

Even though the operations of the current embodiment are shown in a particular sequence, the invention is not limited to the specific sequence shown. The person skilled in the art readily appreciates that some variations of the sequence of operation are possible without departing from the invention.

It is noted that the above described features and processing operations may be realized by dedicated hardware or may be realized as programs including code instructions executed on data processing units, e.g. server units as server unit 141, 142 and 143 or server units 52, 53 and 54 and client units such as client unit 13. It is further possible that parts of the above sequences of operations are carried out in hardware, whereas others of the above processing operations are carried out using software.

It is further noted that a computer readable medium may be provided, having a program recorded thereon, where the program is to make a computer or system of data processing devices execute functions of the above described operations, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

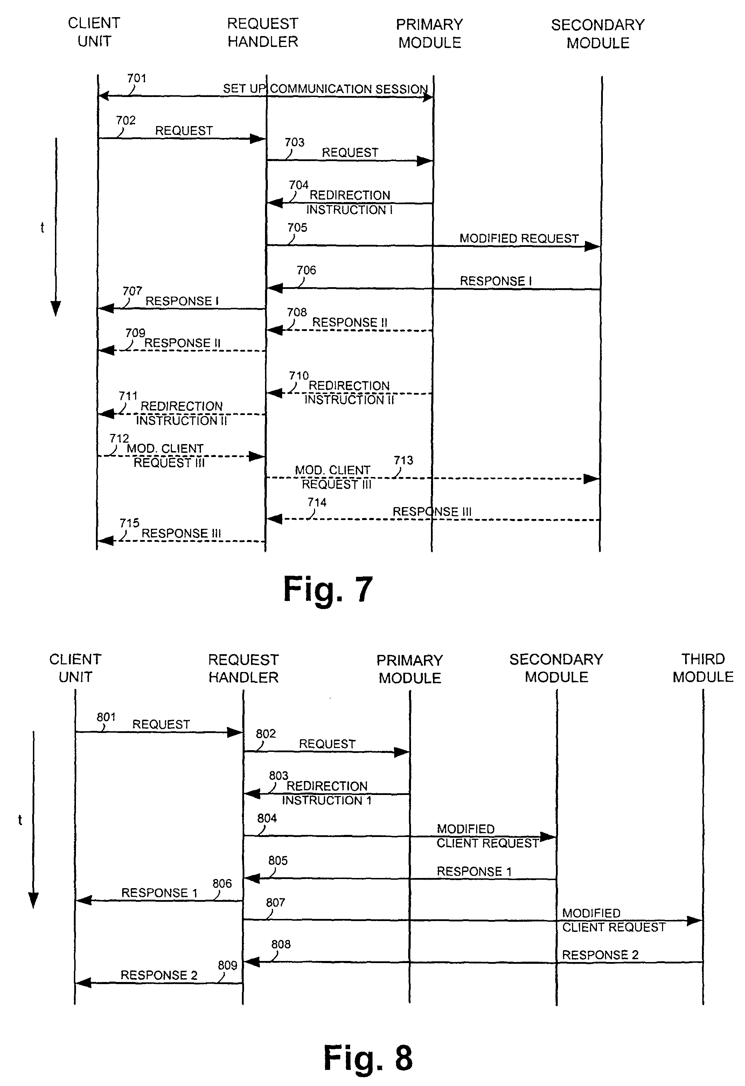

In the following a further embodiment of the invention will be described with respect to Fig. 7.

Fig. 7 shows a time sequence of operations for redirecting client requests according to another embodiment of the invention.

Fig. 7 particularly outlines a flow of information between a client unit, a request handler, a primary application module and a secondary application module, for example as shown in Figs. 1 OR 5. However, Fig. 7 is not limited to the embodiments of Fig. 1 or 5.

In Fig. 7 time evolves in downward direction, as indicated in the figure.

In a first operation 701 a communication session is set up between a client unit and a primary application module such as client unit 13 and the primary application module 10 shown in Figs. 1 and 5.

For example, setting up the communication session may include transmitting a request from the client unit to the primary application module, instructing the primary application module to prepare the set-up of the communication session at the side of the primary application module, e.g. a server unit.

Subsequent thereto, the primary application module may transmit a response to the client unit, subsequent to which the client unit prepares the set-up of the communication session with the primary application module.

Thereafter, the communication session involving the primary application module and the client unit can be established.

The communication session may also be set up as outlined with respect to previous embodiments.

In an operation 702 a client request is transmitted from the client to the request handler, such as request handler 11 of Figs. 1 or 5. The client unit may be connected to the request handler via an external communication link, such as a network connection, and/or a connection via a dedicated communication line and/or including wireless communications. The communication link between the client unit and the request handler may have low bandwidth. The client request may be constituted and transmitted to the request handler as outlined with respect to previous embodiments.

In an operation 703 the request is forwarded by the request handler to the primary application module, where it may be suitably analyzed in preparation of generating a first redirection instruction. As outlined with respect to previous embodiments the redirection instruction may correspond to the entire client request or may correspond to part of the client request.

The redirection instruction is transmitted from the primary application module to the request handler in an operation 704 and the request handler then suitably modifies the client request received from the client unit in operation 702, as outlined before. The modifying operation, if necessary, may be carried out as outlined with respect to previous embodiments. A modification may not be necessary, if the client request already includes an external resource locator.

In an operation 705 the modified client request is transmitted to the secondary application module, such as the secondary application module 12 of Figs. 1 or 5. The secondary application module then performs the required operations for serving the client request, as outlined before, and, in an operation 706 transmits a first response to the request handler. The request handler forwards the first response to the client unit in an operation 707.

Optionally, the further operation 708-712 outlined by dashed lines may be executed in the embodiment of Fig. 7.

Particularly if the client request is divided into a first part and a second part wherein one part is already served at the primary application module, the primary application module may directly transmit a second response in an operation 708 to the request handler, and the request handler in an operation 709 may forward this second response to the client unit. Thus, the primary application module may directly serve at least part of the client request without redirection.

Further, in an operation 710 the primary application module may generate a second redirection instruction for transmission to the client unit. In this second redirection instruction the client unit is specified as addressee for redirecting the request and therefore the request handler only forwards the second redirection instruction to the client unit in an operation 711.

Upon receiving the second redirection instruction, e.g. a redirection instruction corresponding to part of the original client request as transmitted in operation 702, the client unit transmits a modified client request to the request handler in an operation 712. This modified client request preferably specifies a secondary application module such as the secondary application module shown in Fig. 7. Therefore, in an operation 713 the request handler forwards the modified client request to the secondary application module. A third response, i.e. the response to the modified client request received in operation 713 at the secondary application module will be transmitted to the request handler in an operation 714, and in an operation 715 the request handler will transmit the third response to the client unit for further handling.

As outlined with respect to Fig. 7, various scenarios in serving a client request are possible, including serving the entire client request at the primary application module, redirecting the entire client request or parts thereof to a secondary application module either via the request handler or the client unit.

In the following a further embodiment of the invention will be described with respect to Fig. 8. Fig. 8 outlines a time sequence operation in redirecting client requests according to another embodiment of the invention.

Fig. 8 particularly outlines operations at a client unit, a request handler, a primary application module and a secondary application module, for example as illustrated in Figs. 1 or 5. Further, Fig. 8 outlines further operations at a third application module.

In a first operation 801 a client request is transmitted from the client unit to the request handler, as outlined before.

In an operation 802 the request is forwarded to the primary application module.

A first redirection instruction is generated at the primary application module and transmitted to the request handler in an operation 803.

At the request handler the client request received in operation 801 is suitably modified and in an operation 804 the modified client request is transmitted to the secondary application module, as outlined with respect to previous embodiments. The secondary application module generates a first response and transmits same to the request handler in an operation 805.

The request handler forwards the first response in an operation 806 to the client unit.

Further, the request handler may transmit a further modified client request to the third application module, for example based on the first redirection instruction received from the primary application module in operation 803.

However, alternatively, it is also possible that the further modified client request transmitted from the request handler to the third application module in operation 807 is generated based on a second redirection instruction (not shown) received at the request handler from the secondary application module.

The third application module, upon receiving the modified client request, generates a suitable response and transmits same to the request handler in an operation 808.

The request handler then forwards the second response in an operation 809 to the client unit.

The embodiment of Fig. 8, as the embodiment shown in Fig. 7, allows to maintain a communication load between a client unit and a request handler at a low level while performing a redirection of client requests as necessary.

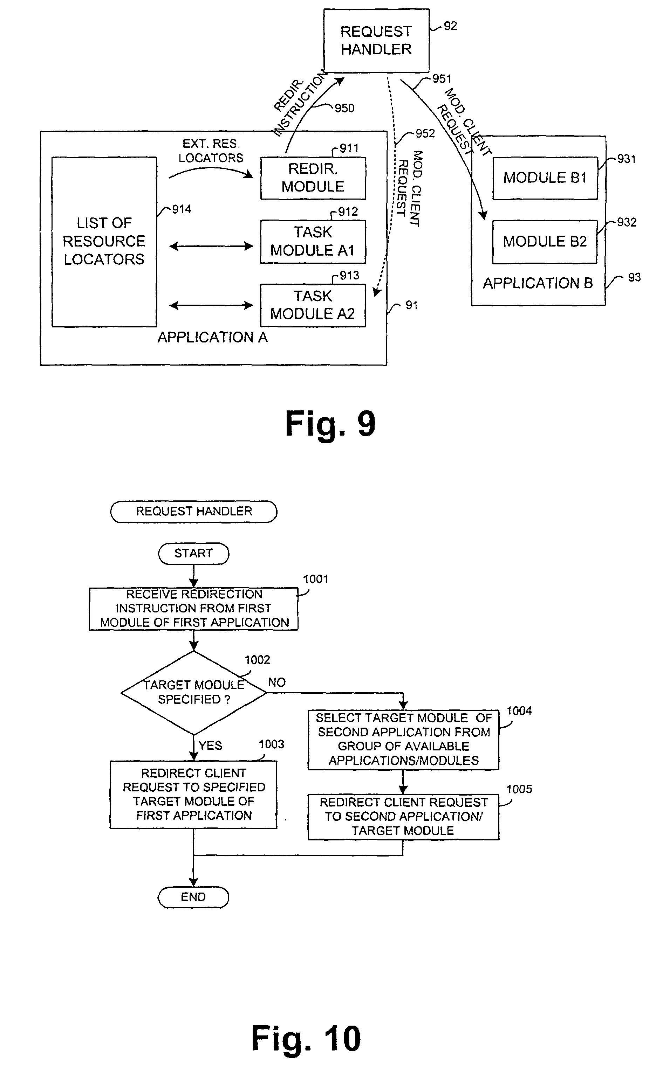

In the following a further embodiment of the invention will be described with respect to Fig. 9.

Fig. 9 shows elements of a system for redirecting client requests according to another embodiment of the invention. Fig. 9 shows a first application 91, a request handler 92 and a second application 93. A client unit (not shown) or a plurality of client units may communicate with the request handler 92.

The application 91 includes a plurality of modules, including a redirection module 911, a first task module 912, and a second task module 913. Further, the primary application module 91 includes a list of resource locators 914, for example as outlined with respect to previous embodiments.

The secondary application module 93 is shown to include a first module 931 and a second module 932.

Similar to the primary application module 10 outlined with respect to Fig. 1, the above modules and the applications 91 and 93 may be realized as a programs or may be realized by dedicated hardware devices. It is also possible that the functions of the applications 91 and 93 and the elements of the above modules are realized by a server unit such as the server units 141, 142 and 143 described with respect to Fig. 1.

The request handler, the first application and the second application may be located on separate data processing units. Alternatively, the request handler and the first application may be located on a single server unit. This unit may also include the second application.

In the following the elements of the primary application module will be outlined in further detail.

The first application 91 includes a redirection module 911 performing functions for redirecting client requests, as outlined with respect to previous embodiments. The first and second task modules of the first application 91 may provide a certain functionality in providing a service for a user operating a client unit, such as retrieving documents, displaying documents, rendering documents and similar.

The first task module 912 and the second task module 913 both have access to the list of resource locators 914. In a communication session between a client unit and the first application 91 the task modules 912 and 913 may therefore introduce elements into the list of resource locators. This may include providing internal resource locators corresponding to external resource locators, as outlined with respect to previous embodiments.

Thus, in a communication session between the client unit and the first application 91 the task modules maintain and update the list of resource locators, as appropriate.

If in this scenario a redirection of a client request or parts thereof becomes necessary, the redirection module 911 generates redirection instruction based on the list of resource locators. Preferably, the redirection module includes into a redirection instruction an external resource locator corresponding to an internal resource locator previously received with a client request. The redirection module then transmits the redirection instruction to the request handler 92, as indicated by an arrow 950.

The request handler 92 forwards the client request as shown by arrow 951, e.g. modified as outlined with respect to previous embodiments, to the second application 93, if necessary, further specifying one of the modules 931 and 932.

The further operations at the second application 93 may be similar to the ones outlined with respect to previous embodiments, i.e. the second application 93 and/or the modules 931 and 932 may generate a suitable response to the client request and transmit same via the request handler to the client unit (not shown).

Alternatively, the request handler may transmit a modified client request, as indicated by an arrow 952 back to the first application 91. For example the modified client request may be transmitted to another task module specified, in the present case task module 913.

Thus, a redirection instruction may be generated for a redirection to a task module of the first application 91.

Accordingly, the request handler may be used in forwarding a client request irrespective of the target module, i.e. the request handler is responsible for forwarding a client request to a module of the same application or to a module of another application, e.g. another application located at the same server unit or a remote server unit.

In the following a further embodiment of the invention will be described with respect to Fig. 10.

Fig. 10 shows operations for redirecting client requests at a request handler according to another embodiment of the invention.

The operations of Fig. 10 may be performed using the systems of Fig. 1, Fig. 5 or Fig. 9, however, Fig. 10 is not limited thereto.

Fig. 10 particularly outlines steps for selecting a target module, if the target module for a redirection of the client request is not already specified in the redirection instruction.

In an operation 1001 a redirection instruction from a first module of a first application is received.

In an operation 1002 the request handler analyzes the redirection instruction and determines whether a target module is already specified in the redirection instruction, e.g. a target module selected by the first module of the first application.

If the decision in operation 1002 is YES, indicating that a target module is specified in the redirection instruction, the client request is transmitted to the specified target module. The target module is preferably specified in the redirection instruction, if the target module and the first module issuing the redirection instruction are part of the same application, as in this case it may be desired to avoid redirection to a module of another application, e.g. on another server unit.

If the decision in operation 1002 is NO, indicating that the target module is not specified in the redirection instruction, the request handler in an operation 1004 selects a target module from a group of available applications/modules.

If a plurality of target modules suitable for serving the request are available, e.g. on a plurality of server units, the request handler may also perform functionality of a load balancer, and therefore, the request handler may apply load balancing algorithms in selecting a target module from the available target modules.

In an operation 1005 the request handler then redirects the client request to the target module. Further operations may be similar as outlined with respect to previous embodiments.

It is noted that the above described features and processing operations may be realized by dedicated hardware or may be realized as programs including code instructions executed on data processing units, e.g. server units as server unit 141, 142 and 143 or server units 52, 53 and 54 and client units such as client unit 13. It is further possible that parts of the above sequences of operations are carried out in hardware, whereas others of the above processing operations are carried out using software.

It is further noted that a computer readable medium may be provided, having a program recorded thereon, where the program is to make a computer or system of data processing devices execute functions of the above described operations, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

According to another embodiment of the invention a server unit for redirecting client requests including a first application module may have the following elements.
1) Server unit for redirecting client requests including a first application module having
   a code section containing instructions to receive a client request;
   a code section containing instructions to generate a first redirection instruction based on the client request;
   a code section containing instructions to transmit the first redirection instruction to a request handler, instructing the request handler to transmit the client request to a second application module for serving the client request.
2). Server unit of 1), including a code section containing instructions to determine the second application module for serving the client request based on a list of available application modules and to add to the redirection instruction address information of the second application module.
3). Server unit of 1), including
   a code section containing instructions to receive the client request from the request handler, the request handler forwarding the client request from the client unit to the first application module; and
   a code section containing instructions to include into the first redirection instruction information specifying that the request handler is selected for redirecting the client request to the second application module.
4). Server unit of 1), wherein the client request includes an internal resource locator previously transmitted from the first application module to the client unit and specifying a requested resource, the internal resource locator being valid in a communication between the first application module and the client unit.
5). Server unit of 1), including a code section containing instructions to obtain an external resource locator based on the internal resource locator, the external resource locator allowing the second application module to access the resource and to include the external resource locator into the first redirection instruction.
6). Server unit of 1), including a code section containing instructions to perform a look-up operation in a resource locator table associating internal resource locators and external resource locators at least used by the second application module, the first resource locator constituting an address for indexing into the resource locator table to identify the second resource locator.
7). Server unit of 1), including a code section containing instructions to instruct the request handler to modify the client request based on information included in the redirection instruction.
8). Server unit of 7), including a code section containing instructions to instruct the request handler to at least one of:
   replace the internal resource locator by the external resource locator; and
   include address information of the second application module into the client request.
9). Server unit of 1), including a code section containing instructions to generate the first redirection instruction based on a first part of the client request, and wherein the first application module serves a second part of the client request is served.
10). Server unit of 1), including
   a code section containing instructions to determine a third application module for serving a third part of the client request and to generate a second redirection instruction based on the third part of the client request; and
   a code section containing instructions to transmit the second redirection instruction to the request handler, instructing the request handler to transmit a modified client request to the third application module.
11). Server unit of 1), including code sections containing instructions to execute the first and second application module.
12). Server unit of 1), including a code section containing instructions to execute the first application module, and wherein the second application module is executed on a second server unit remote from the first server unit.
   According to another embodiment of the invention, a request handler may have the following elements.
13). Request handler for redirecting client requests, including:
   a code section containing instructions to receive a client request from a client unit;
   a code section containing instructions to forward the client request to a first application module;
   a code section containing instructions to receive a first redirection instruction from the first application module; and
   a code section containing instructions to forward the client request to a second application module.
14). Request handler of 13), including a code section containing instructions to forward a response to the first redirection request from the second application module to the client unit.
15). Request handler of 13), wherein the first redirection instruction includes address information of the second application module and information specifying that the request handler is selected for transmitting the first redirection instruction to the second application module.
16). Request handler of 13), wherein the client request includes an internal resource locator previously transmitted from the first application module to the client unit and specifying a requested resource, the internal resource locator being valid in a communication between the first application module and the client unit.
17). Request handler of 13), wherein the first redirection instruction includes an external resource locator associated with the internal resource locator, the external resource locator allowing the second application module to access the resource.
18). Request handler of 13), including
   a storage unit to intermediately store the client request; and
   including a code section containing instructions to modify the client request based on information included in the redirection instruction.
19). Request handler of 18), including a code section containing instructions for at least one of:
   replacing the internal resource locator by the external resource locator; and
   including the address information of the second application module into the client request.
20). Request handler of 13), wherein
   the first redirection request is associated with a first part of the client request, and
   a second part of the client request is served by the first application module by transmitting a response to the client unit through the request handler.
21). Request handler of 13), including
   a code section containing instructions to receive a third redirection request based on a third part of the client request; and
   a code section containing instructions to transmit the third redirection request to a third application module for serving the third redirection request.
22). Request handler of 13), including a code section containing instructions to determine a second application module for serving the client request, if the first application module and the second application module do not form part of a same application.
23). Request handler of 13), including code sections containing instructions to communicate with a server data processing device executing the first and second application module.
24). Request handler of 13), including a code section containing instructions to communicate with a first server unit executing the first application module and with a second server unit executing the second application module.

## Claims

1. Method for redirecting client requests at a server unit, including:
receiving a client request at a first application module (10) from a request handler;
generating a first redirection instruction based on the client request;
transmitting the first redirection instruction to instruct the request handler (11) to transmit at least part of the client request to a second application module (12) for serving the at least part of the client request.

2. Method of claim 1, including
selecting the second application module for serving the client request based on available application modules; and
adding to the first redirection instruction address information of the second application module for serving the client request.

3. Method of claim 1 or 2, wherein
the client request is received from the request handler (11), the request handler forwarding the client request from a client unit (13) to the first application module (10); and
the first redirection instruction includes information specifying that the request handler is selected for redirecting the client request to the second application module (12).

4. Method of one of the preceding claims, wherein the client request includes an internal resource locator previously transmitted from the first application module (10) to the client unit (13) and specifying a requested resource, the internal resource locator being valid in a communication between the first application module and the client unit.

5. Method of one of the preceding claims, wherein generating the first redirection instruction includes:
obtaining an external resource locator based on the internal resource locator, the external resource locator allowing the second application module to access the resource; and
including the external resource locator into the first redirection instruction.

6. Method of one of the preceding claims, wherein generating the first redirection instruction includes a look-up operation in a resource locator table associating internal resource locators and external resource locators at least used by the second application module, the internal resource locator constituting an address for indexing into the resource locator table to identify the external resource locator.

7. Method of one of the preceding claims, wherein the redirection instruction instructs the request handler to modify the client request based on information included in the redirection instruction.

8. Method of claim 5, wherein
the redirection instruction instructs the request handler to modify the client request based on information included in the redirection instruction; and
wherein the modification of the client request includes at least one of:
replacing the internal resource locator by the external resource locator; and
including address information of the second application module into the client request to be forwarded to the secondary application module.

9. Method of one of the preceding claims, wherein
the first redirection instruction is generated based on a first part of the client request, and
a second part of the client request is served by the first application module.

10. Method of one of the preceding claims, including
determining a third application module for serving a third part of the client request;
generating a second redirection instruction based on the third part of the client request; and
transmitting the second redirection instruction to the request handler, instructing the request handler to transmit a modified client request to the third application module.

11. Method of one of the preceding claims, wherein the first and second application module (12) are executed on a single server unit.

12. Method of one of the claims 1 - 10, wherein
the first application module (10) is executed on a first server unit;
the second application module (12) is executed on a second server unit remote from the first server unit; and
the request handler (11) is constituted by a data processing device further including functions of at least one of a load balancer and firewall.

13. Method for redirecting client requests at a request handler, including:
receiving at the request handler (11) a client request from a client unit (13) ;
forwarding the client request to a first application module (10);
receiving a first redirection instruction from the first application module (10); and
forwarding at least part of the client request to a second application module (12).

14. Method of claim 13, including forwarding a response to the client request from the second application module (12) to the client unit (13).

15. Method of one of the claims 13 or 14, wherein the first redirection instruction includes address information of the second application module (12) and information specifying that the request handler (11) is selected for transmitting the first redirection instruction to the second application module (12).

16. Method of one of the claims 13 - 15, wherein the client request includes an internal resource locator previously transmitted from the first application module (10) to the client unit (13) and specifying a requested resource, the internal resource locator being valid in a communication between the first application module (10) and the client unit.

17. Method of one of the claims 13 - 16, wherein the first redirection instruction includes an external resource locator associated with the internal resource locator, the external resource locator allowing the second application module (12) to access the resource.

18. Method of one of the claims 13 - 17, wherein the request handler (11) intermediately saves and modifies the client request based on information included in the redirection instruction.

19. Method of claim 18, wherein the modification of the client request includes at least one of:
replacing the internal resource locator by the external resource locator; and
including the address information of the second application module (12) into the client request.

20. Method of one of the claims 13 - 19, wherein
the first redirection request is associated with a first part of the client request, and
a second part of the client request is served by the first application module (10) by transmitting a response to the client unit (13) through the request handler (11).

21. Method of one of the claims 13 - 20, including
receiving a third redirection request based on a third part of the client request; and
transmitting the third redirection request to a third application module for serving the third redirection request.

22. Method of one of the claims 13 - 21, including determining the second application module (12) for serving the client request, if the first application module (10) and the second application module (12) do not form part of a same application.

23. Method of one of the claims 13 - 22, wherein the request handler (11) communicates with a server unit executing the first and second application module (12).

24. Method of one of the claims 13 - 23, wherein the request handler (11) communicates with a first server unit executing the first application module (10) and with a second server unit executing the second application module (12).

25. Method of one of the claims 13 - 24, including a plurality of request handler (11), wherein each request handler (11) further executes functions of at least one of a load balancer and firewall.

26. Method of one of the preceding claims, wherein the client request includes at least one of:
a plurality of internal resource locators; and
a plurality of external resource locators.

27. Method of one of the preceding claims, wherein
the application modules are constituted by Java servlets; and
the second resource locator includes a URL.

28. A computer readable medium, in which a program is embodied, where the program is to make a computer execute the method of one of the claims 1 - 27.

29. A computer program product comprising the computer readable medium according to claim 28.

30. Server unit for redirecting client requests including a first application module (10) having
application module receiving means (101) to receive a client request;
application module redirection means (102) to generate a first redirection instruction based on the client request;
application module transmission means (103) to transmit the first redirection instruction to a request handler (11), instructing the request handler (11) to transmit at least part of the client request to a second application module (12) for serving the at least part of the client request.

31. Server unit of claim 30, wherein the application module redirection means (102) is adapted to select the second application module (12) for serving the client request based on available application modules and to add to the redirection instruction address information of the second application module (12).

32. Server unit of claim 30 or 31, wherein
the application module receiving means (101) is adapted to receive the client request from the request handler (11), the request handler (11) forwarding the client request from the client unit (13) to the first application module (10); and
the application module redirection means (102) is adapted to include into the first redirection instruction information specifying that the request handler (11) is selected for redirecting the client request to the second application module (12).

33. Server unit of one of the claims 30 - 32, wherein the client request includes an internal resource locator previously transmitted from the first application module (10) to the client unit (13) and specifying a requested resource, the internal resource locator being valid in a communication between the first application module (10) and the client unit (13).

34. Server unit of one of the claims 30 - 33, wherein the application module redirection means (102) is adapted to obtain an external resource locator based on the internal resource locator, the external resource locator allowing the second application module (12) to access the resource and to include the external resource locator into the first redirection instruction.

35. Server unit of one of the claims 30 - 34, wherein the application module redirection means (102) is adapted to perform a look-up operation in a resource locator table associating internal resource locators and external resource locators at least used by the second application module (12), the first resource locator constituting an address for indexing into the resource locator table to identify the second resource locator.

36. Server unit of one of the claims 30 - 35, wherein the application module redirection means (102) is adapted to instruct the request handler (11) to modify the client request based on information included in the redirection instruction.

37. Server unit of claim 34, wherein
the application module redirection means (102) is adapted to instruct the request handler (11) to modify the client request based on information included in the redirection instruction; and
the application module redirection means (102) is adapted to instruct the request handler (11) to at least one of:
replace the internal resource locator by the external resource locator; and
include address information of the second application module (12) into the client request.

38. Server unit of one of the claims 30 - 37, wherein the application module redirection means (102) is adapted to generate the first redirection instruction based on a first part of the client request, and wherein the first application module (10) serves a second part of the client request.

39. Server unit of one of the claims 30 - 38, wherein
the application module redirection means (102) is adapted to determine a third application module for serving a third part of the client request and to generate a second redirection instruction based on the third part of the client request; and
the application module transmission means is adapted to transmit the second redirection instruction to the request handler (11), instructing the request handler (11) to transmit a modified client request to the third application module.

40. Server unit of one of the claims 30 - 39, adapted to execute the first and second application module (12).

41. Server unit of one of the claims 30 - 39, adapted to execute the first application module (10), and wherein the second application module (12) is executed on a second server unit remote from the first server unit.

42. Request handler for redirecting client requests, including:
request handler receiving means (110) to receive a client request from a client unit (13);
request handler transmission means (111) to forward the client request to a first application module (10);
wherein the request handler receiving means is adapted to receive a first redirection instruction from the first application module (10); and
the request handler transmission means is adapted to forward at least part of the client request to a second application module (12).

43. Request handler of claim 42, wherein the request handler transmission means is adapted to forward a response to the client request from the second application module (12) to the client unit (13).

44. Request handler of one of the claims 42 or 43, wherein the first redirection instruction includes address information of the second application module (12) and information specifying that the request handler is selected for transmitting the first redirection instruction to the second application module (12).

45. Request handler of one of the claims 42 - 44, wherein the client request includes an internal resource locator previously transmitted from the first application module (10) to the client unit (13) and specifying a requested resource, the internal resource locator being valid in a communication between the first application module (10) and the client unit (13).

46. Request handler of one of the claims 42 - 45, wherein the first redirection instruction includes an external resource locator associated with the internal resource locator, the external resource locator allowing the second application module (12) to access the resource.

47. Request handler of one of the claims 42 - 46, including
storage means to intermediately store the client request; and
wherein the request handler transmission means (111) is adapted to modify the client request based on information included in the redirection instruction.

48. Request handler of claim 47, wherein the request handler transmission means (111) is adapted to at least one of:
replace the internal resource locator by the external resource locator; and
include the address information of the second application module (12) into the client request.

49. Request handler of one of the claims 42 - 48, wherein
the first redirection request is associated with a first part of the client request, and
a second part of the client request is served by the first application module (10) by transmitting a response to the client unit (13) through the request handler.

50. Request handler of one of the claims 42 - 49, wherein
the request handler receiving means (110) is adapted to receive a third redirection request based on a third part of the client request; and
the request handler transmission means (111) is adapted to transmit the third redirection request to a third application module for serving the third redirection request.

51. Request handler of one of the claims 42 - 50, including request handler determining means to determine a second application module (12) for serving the client request, if the first application module (10) and the second application module (12) do not form part of a same application.

52. Request handler of one of the claims 42 - 51, adapted to communicate with a server data processing device executing the first and second application module (12).

53. Request handler of one of the claims 42 - 52, adapted to communicate with a first server unit executing the first application module (10) and with a second server unit executing the second application module (12).

## Patentansprüche

1. Verfahren zum Umleiten von Client-Anfragen an einer Servereinheit mit:
Empfangen einer Client-Anfrage bei einem ersten Applikationsmodul (10) von einem Anfrage-Anwender;
Erzeugen einer ersten Umleitungs-Anweisung basierend auf der Client-Anfrage;
Übertragen der ersten Umleitungs-Anweisung, um den Anfrage-Anwender (11) anzuweisen, mindestens einen Teil der Client-Anfrage an ein zweites Applikationsmodul (12) zum Betreuen des mindestens einen Teils der Client-Anfrage zu übertragen.

2. Verfahren nach Anspruch 1 mit:
Auswählen des zweiten Applikationsmoduls zum Betreuen der Client-Anfrage, basierend auf verfügbaren Applikationsmodulen; und
Hinzufügen von einer Adressinformation des zweiten Applikationsmoduls zum Betreuen der Client-Anfrage zu der ersten Umleitungs-Anweisung.

3. Verfahren nach Anspruch 1 oder 2 bei welchem
die Client-Anfrage vom Anfrage-Anwender (11) empfangen wird, wobei der Anfrage-Anwender die Client-Anfrage von einer Client-Einheit (13) zum ersten Applikationsmodul (10) weiterleitet; und
die erste Umleitungs-Anweisung eine Information enthält, welche spezifiziert, dass der Anfrage-Anwender zur Umleitung der Client-Anfrage zum zweiten Applikationsmodul (12) ausgewählt ist.

4. Verfahren nach einem der vorhergehenden Ansprüche, bei welchem die Client-Anfrage einen internen Ressourcen-Pächter enthält, welcher zuvor vom ersten Applikationsmodul (10) zur Client-Einheit (13) übertragen wird, und eine angefragte Ressource spezifiziert, wobei der interne Ressourcen-Pächter bei einer Übertragung zwischen dem ersten Applikationsmodul und der Client-Einheit gültig ist.

5. Verfahren nach einem der vorhergehenden Ansprüche, bei welchem das Erzeugen der ersten Umleitungs-Anweisung enthält:
Erlangen eines externen Ressourcen-Pächters basierend auf dem internen Ressourcen-Pächter, wobei der externe Ressourcen-Pächter es dem zweiten Applikationsmodul erlaubt auf die Ressource zuzugreifen; und
Einbeziehen des externen Ressourcen-Pächters in die erste Umleitungs-Anweisung.

6. Verfahren nach einem der vorhergehenden Ansprüche, bei welchem das Erzeugen der ersten Umleitungs-Anweisung einen Nachschlagebetrieb in einer Ressourcen-Pächter Tabelle enthält, welche interne Ressourcen-Pächter und externe Ressourcen-Pächter in Zusammenhang bringt, welche zumindest durch das zweite Applikationsmodul verwendet werden, wobei der interne Ressourcen-Pächter eine Adresse zur Einordnung in die Ressourcen-Pächter Tabelle bildet, um den externen Ressourcen-Pächter zu identifizieren.

7. Verfahren nach einem der vorhergehenden Ansprüche, bei welchem die Umleitungs-Anweisung den Anfrage-Anwender anweist die Client-Anfrage basierend auf Information zu modifizieren, welche in der Umleitungs-Anweisung enthalten ist.

8. Verfahren nach Anspruch 5, bei welchem
die Umleitungs-Anweisung dem Anfrage-Anwender anweist die Client-Anfrage basierend auf einer Information zu modifizieren, welche in der Umleitungs-Anweisung enthalten ist; und
wobei die Modifikation der Client-Anfrage enthält:
Ersetzen des internen Ressourcen-Pächters durch den externen Ressourcen-Pächter und/oder
Einbeziehen von einer Adressinformation des zweiten Applikationsmoduls in die Client-Anfrage, welche an das zweite Applikationsmodul weiterzuleiten ist.

9. Verfahren nach einem der vorhergehenden Ansprüche, bei welchem
die erste Umleitungs-Anweisung basierend auf einem ersten Teil der Client-Anfrage erzeugt wird, und
ein zweiter Teil der Client-Anfrage durch das erste Applikationsmodul betreut wird.

10. Verfahren nach einem der vorhergehenden Ansprüche mit:
Bestimmen eines dritten Applikationsmoduls zum Betreuen eines dritten Teils der Client-Anfrage;
Erzeugen von einer zweiten Umleitungs-Anweisung basierend auf dem dritten Teil der Client-Anfrage, und
Übertragen der zweiten Umleitungs-Anweisung an den Anfrage-Anwender, welche den Anfrage-Anwender dazu anweist eine modifizierte Client-Anfrage an das dritte Applikationsmodul zu übertragen.

11. Verfahren nach einem der vorhergehenden Ansprüche, bei welchem das erste und zweite Applikationsmodul (12) auf einer einzelnen Server-Einheit ausgeführt werden.

12. Verfahren nach einem der Ansprüche 1 bis 10, bei welchem
das erste Applikationsmodul (10) auf einer ersten Server-Einheit ausgeführt wird;
das zweite Applikationsmodul (12) auf einer zweiten Server-Einheit ausgeführt wird, welche von der ersten Server-Einheit entfernt ist; und
der Anfrage-Anwender (11) durch eine Datenverarbeitungs-Vorrichtung gebildet wird, welche ferner Funktionen von einem Lastausgleicher und/oder einer Firewall enthält.

13. Verfahren zum Umleiten von Client-Anfragen an einem Anfrage-Anwender mit:
Empfangen von einer Client-Anfrage von einer Client-Einheit (13) am Anfrage-Anwender (11);
Weiterleiten der Client-Anfrage an ein erstes Applikationsmodul (10);
Empfangen von einer ersten Umleitungs-Anweisung vom ersten Applikationsmodul (10); und
Weiterleiten von mindestens einem Teil der Client-Anfrage an ein zweites Applikationsmodul (12).

14. Verfahren nach Anspruch 13, welches ferner ein Weiterleiten von einer Antwort zur Client-Anfrage vom zweiten Applikationsmodul (12) zur Client-Einheit (13) enthält.

15. Verfahren nach einem der Ansprüche 13 oder 14, bei welchem die erste Umleitungs-Anweisung eine Adressinformation des zweiten Applikationsmoduls (12) und eine Information enthält, welche spezifiziert, dass der Anfrage-Anwender (11) zur Übertragung der ersten Umleitungs-Anweisung an das zweite Applikationsmodul (12) ausgewählt ist.

16. Verfahren nach einem der Ansprüche 13 bis 15, bei welchem die Client-Anfrage einen internen Ressourcen-Pächter enthält, welcher zuvor durch das erste Applikationsmodul (10) an die Client-Einheit (13) übertragen wird, und eine angefragte Ressource spezifiziert, wobei der interne Ressourcen-Pächter bei einer Übertragung zwischen dem ersten Applikationsmodul (10) und der Client-Einheit gültig ist.

17. Verfahren nach einem der Ansprüche 13 bis 16, bei welchem die erste Umleitungs-Anweisung einen externen Ressourcen-Pächter enthält, welcher mit dem internen Ressourcen-Pächter in Zusammenhang steht, wobei der externe Ressourcen-Pächter es dem zweiten Applikationsmodul (12) erlaubt auf die Ressource zuzugreifen.

18. Verfahren nach einem der Ansprüche 13 bis 17, bei welchem der Anfrage-Anwender (11) zwischendurch die Client-Anfrage basierend auf der in der Umleitungs-Anweisung enthaltenen Information speichert und modifiziert.

19. Verfahren nach Anspruch 18, bei welchem die Modifikation der Client-Anfrage enthält:
Ersetzen des internen Ressourcen-Pächters durch den externen Ressourcen-Pächter und/oder
Einbeziehen der Adressinformation des zweiten Applikationsmoduls (12) in die Client-Anfrage.

20. Verfahren nach einem der Ansprüche 13 bis 19, bei welchem die erste Umleitungs-Anfrage mit einem ersten Teil der Client-Anfrage in Zusammenhang steht und,
ein zweiter Teil der Client-Anfrage durch das erste Applikationsmodul (10) betreut wird, indem über den Anfrage-Anwender (11) eine Antwort an die Client-Einheit (13) übertragen wird.

21. Verfahren nach einem der Ansprüche 13 bis 20, welches enthält:
Empfangen einer dritten Umleitungs-Anfrage basierend auf einem dritten Teil der Client-Anfrage, und
Übertragen der dritten Umleitungs-Anfrage an ein drittes Applikationsmodul, um die dritte Umleitungs-Anfrage zu betreuen.

22. Verfahren nach einem der Ansprüche 13 bis 21, welches ein Bestimmen des zweiten Applikationsmoduls (12) zum Betreuen der Client-Anfrage enthält, wenn das erste Applikationsmodul (10) und das zweite Applikationsmodul (12) nicht den Teil einer selben Applikation ausbilden.

23. Verfahren nach einem der Ansprüche 13 bis 22, bei welchem der Anfrage-Anwender (11) mit einer Server-Einheit kommuniziert, welche das erste und zweite Applikationsmodul (12) ausführt.

24. Verfahren nach einem der Ansprüche 13 bis 23, bei welchem der Anfrage-Anwender (11) mit einer ersten Server-Einheit, welche das erste Applikationsmodul (10) ausführt, und mit einer zweiten Server-Einheit kommuniziert, welche das zweite Applikationsmodul (12) ausführt.

25. Verfahren nach einem der Ansprüche 13 bis 24, welches eine Mehrzahl an Anfrage-Anwender (11) enthält, wobei jeder Anfrage-Anwender (11) ferner Funktionen von einem Lastausgleicher und/oder einer Firewall ausführt.

26. Verfahren nach einem der vorhergehenden Ansprüche, bei welchem die Client-Anfrage enthält:
eine Mehrzahl an internen Ressourcen-Pächter und/oder
eine Mehrzahl an externen Ressourcen-Pächter.

27. Verfahren nach einem der vorhergehenden Ansprüche, bei welchem
die Applikationsmodule durch Java-Servlets gebildet werden und,
der zweite Ressourcen-Pächter eine URL enthält.

28. Computerlesbares Medium, in welchem ein Programm ausgeführt ist, wobei das Programm es einem Computer ermöglicht, das Verfahren von einem der Ansprüche 1 bis 27 auszuführen.

29. Computerprogrammprodukt, welches das Computerlesbare Medium nach Anspruch 28 enthält.

30. Server-Einheit zum Umleiten von Client-Anfragen, welche ein erstes Applikationsmodul (10) enthalten, mit
einem Applikationsmodul-Empfangsmittel (101) zum Empfangen einer Client-Anfrage;
einem Applikationsmodul-Umleitungsmittel (102) zum Erzeugen einer ersten Umleitungs-Anweisung basierend auf der Client-Anfrage;
einem Applikationsmodul-Übertragungsmittel (103) zum Übertragen der ersten Umleitungs-Anweisung an einen Anweisungs-Anwender (11), welche den Anfrage-Anwender (11) anweist zumindest einen Teil der Client-Anfrage an ein zweites Applikationsmodul (12) zum Betreuen des zumindest einen Teils der Client-Anfrage zu übertragen.

31. Server-Einheit nach Anspruch 30, bei welcher das Applikationsmodul-Umleitungsmittel (102) dazu angepasst ist das zweite Applikationsmodul (12) zum Betreuen der Client-Anfrage basierend auf verfügbaren Applikationsmodulen auszuwählen, und der Umleitungs-Anweisung eine Adressinformation des zweiten Applikationsmoduls (12) zuzufügen.

32. Servereinheit nach Anspruch 30 oder 31, bei welcher das Applikationsmodul-Empfangsmittel (101) dazu angepasst ist die Client-Anfrage vom Anfrage-Anwender (11) zu empfangen, wobei der Anfrage-Anwender (11) die Client-Anfrage von der Client-Einheit (13) an das erste Applikationsmodul (10) weiterleitet; und
das Applikationsmodul-Umleitungsmittel (102) dazu angepasst ist eine Information in die erste Umleitungs-Anweisung einzufügen, welche spezifiziert, dass der Anfrage-Anwender (11) zum Umleiten der Client-Anfrage an das zweite Applikationsmodul (12) ausgewählt ist.

33. Servereinheit nach einem der Ansprüche 30 bis 32, bei welcher die Client-Anfrage einen internen Ressourcen-Pächter enthält, welcher zuvor vom ersten Applikationsmodul (10) an die Client-Einheit (13) übertragen wurde, und eine angefragte Ressource spezifiziert, wobei der interne Ressourcen-Pächter bei einer Übertragung zwischen dem ersten Applikationsmodul (10) und der Client-Einheit (13) gültig ist.

34. Servereinheit nach einem der Ansprüche 30 bis 33, bei welcher das Applikationsmodul-Umleitungsmittel (102) dazu angepasst ist, einen externen Ressourcen-Pächter basierend auf dem internen Ressourcen-Pächter zu erlangen, wobei der externe Ressourcen-Pächter es dem zweiten Applikationsmodul (12) erlaubt auf die Ressource zuzugreifen und den externen Ressourcen-Pächter in die erste Umleitungs-Anweisung einzufügen.

35. Servereinheit nach einem der Ansprüche 30 bis 34, bei welcher das Applikationsmodul-Umleitungsmittel (102) dazu angepasst ist, einen Nachschlagebetrieb in einer Ressourcen-Pächter Tabelle durchzuführen, welche interne Ressourcen-Pächter und externe Ressourcen-Pächter, welche zumindest durch das zweite Applikationsmodul (12) verwendet werden, in Zusammenhang bringt, wobei der erste Ressourcen-Pächter eine Adresse zur Einordnung in die Ressourcen-Pächter Tabelle bildet, um den zweiten Ressourcen-Pächter zu identifizieren.

36. Servereinheit nach einem der Ansprüche 30 bis 35, bei welcher das Applikationsmodul-Umleitungsmittel (102) dazu angepasst ist, den Anfrage-Anwender (11) anzuweisen die Client-Anfrage basierend auf Information zu modifizieren, welche in der Umleitungs-Anweisung enthalten ist.

37. Servereinheit nach Anspruch 34, bei welcher
das Applikationsmodul-Umleitungsmittel (102) dazu angepasst ist, den Anfrage-Anwender (11) anzuweisen die Client-Anfrage basierend auf Information zu modifizieren, welche in der Umleitungs-Anweisung enthalten ist; und
dass Applikationsmodul-Umleitungsmittel (102) dazu angepasst ist, den Anfrage-Anwender (11) anzuweisen:
den internen Ressourcen-Pächter durch den externen Ressourcen-Pächter zu ersetzten; und/oder
eine Adressinformation des zweiten Applikationsmoduls (12) in die Client-Anfrage einzufügen.

38. Servereinheit nach einem der Ansprüche 30 bis 37, bei welcher das Applikationsmodul-Umleitungsmittel (102) dazu angepasst ist, die erste Umleitungs-Anweisung basierend auf einem ersten Teil der Client-Anfrage zu erzeugen, und bei welcher das erste Applikationsmodul (10) einen zweiten Teil der Client-Anfrage betreut.

39. Servereinheit nach einem der Ansprüche 30 bis 38, bei welcher
das Applikationsmodul-Umleitungsmittel (102) dazu angepasst ist, ein drittes Applikationsmoduls zur Betreuung eines dritten Teils der Client-Anfrage zu bestimmen, und eine zweite Umleitungs-Anweisung basierend auf dem dritten Teil der Client-Anfrage zu erzeugen; und
das Applikationsmodul-Übertragungsmittel dazu angepasst ist, die zweite Umleitungs-Anweisung an den Anfrage-Anwender (11) zu übertragen, welche den Anfrage-Anwender (11) dazu anweist eine modifizierte Client-Anfrage an das dritte Applikationsmodul zu übertragen.

40. Servereinheit nach einem der Ansprüche 30 bis 39, welche dazu angepasst ist, das erste und zweite Applikationsmodul (12) auszuführen.

41. Servereinheit nach einem der Ansprüche 30 bis 39, welche dazu angepasst ist, das erste Applikationsmodul (10) auszuführen, und bei welcher das zweite Applikationsmodul (12) auf einer zweiten Servereinheit ausgeführt wird, welche von der ersten Servereinheit entfernt ist.

42. Anfrage-Anwender zum Umleiten von Client-Anfragen, mit:
einem Anfrage-Anwender Empfangsmittel (110) zum Empfangen einer Client-Anfrage von einer Client-Einheit (13);
einem Anfrage-Anwender Übertragungsmittel (111) zum Weiterleiten der Client-Anfrage an ein erstes Applikationsmodul (10);
wobei das Anfrage-Anwender Empfangsmittel dazu angepasst ist, eine erste Umleitungs-Anweisung vom ersten Applikationsmodul (10) zu empfangen; und
das Anfrage-Anwender Übertragungsmittel dazu angepasst ist, zumindest einen Teil der Client-Anfrage an ein zweites Applikationsmodul (12) weiterzuleiten.

43. Anfrage-Anwender nach Anspruch 42, bei welchem das Anfrage-Anwender Übertragungsmittel dazu angepasst ist, eine Antwort auf die Client-Anfrage vom zweiten Applikationsmodul (12) an die Client-Einheit (13) weiterzuleiten.

44. Anfrage-Anwender nach einem der Ansprüche 42 oder 43, bei welchem die erste Umleitungs-Anweisung eine Adressinformation des zweiten Applikationsmoduls (12) und eine Information enthält, welche spezifiziert, dass der Anfrage-Anwender zur Übertragung der ersten Umleitungs-Anweisung an das zweite Applikationsmodul (12) ausgewählt ist.

45. Anfrage-Anwender nach einem der Ansprüche 42 bis 44, bei welchem die Client-Anfrage einen zuvor vom ersten Applikationsmodul (10) an die Client-Einheit (13) übertragenen internen Ressourcen-Pächter enthält, und welcher eine angefragte Ressource spezifiziert, wobei der interne Ressourcen-Pächter bei einer Übertragung zwischen dem ersten Applikationsmodul (10) und der Client-Einheit (13) gültig ist.

46. Anfrage-Anwender nach einem der Ansprüche 42 bis 45, bei welchem die erste Umleitungs-Anweisung einen externen Ressourcen-Pächter enthält, welcher mit dem internen Ressourcen-Pächter in Zusammenhang steht, wobei der externe Ressourcen-Pächter es dem zweiten Applikationsmodul (12) erlaubt auf die Ressource zuzugreifen.

47. Anfrage-Anwender nach einem der Ansprüche 42 bis 46, mit:
einem Speichermittel zum Zwischenspeichern der Client-Anfrage; und
wobei das Anfrage-Anwender Übertragungsmittel (111) dazu angepasst ist, die Client-Anfrage basierend auf einer Information zu modifizieren, welche in der Umleitungs-Anweisung enthalten ist.

48. Anfrage-Anwender nach Anspruch 47, bei welchem das Anfrage-Anwender Übertragungsmittel (111) dazu angepasst ist:
den internen Ressourcen-Pächter durch den externen Ressourcen-Pächter zu ersetzen, und/oder
die Adressinformation des zweiten Applikationsmoduls (12) in die Client-Anfrage einzubeziehen.

49. Anfrage-Anwender nach einem der Ansprüche 42 bis 48, bei welchem
die erste Umleitungs-Anfrage mit einem ersten Teil der Client-Anfrage in Zusammenhang steht und
ein zweiter Teil der Client-Anfrage durch das erste Applikationsmodul (10) betreut wird, indem eine Antwort über den Anfrage-Anwender an die Client-Einheit (13) übertragen wird.

50. Anfrage-Anwender nach einem der Ansprüche 42 bis 49, bei welchem
das Anfrage-Anwender Empfangsmittel (110) dazu angepasst ist, eine dritte Umleitungs-Anfrage basierend auf einem dritten Teil der Client-Anfrage zu empfangen, und
das Anfrage-Anwender Übertragungsmittel (111) dazu angepasst ist, die dritte Umleitungs-Anfrage an ein drittes Applikationsmodul zum Betreuen der dritten Umleitungs-Anfrage zu übertragen.

51. Anfrage-Anwender nach einem der Ansprüche 42 bis 50, welcher ein Anfrage-Anwender Bestimmungsmittel zum Bestimmen eines zweiten Applikationsmoduls (12) zum Betreuen der Client-Anfrage enthält, wenn das erste Applikationsmodul (10) und das zweite Applikationsmodul (12) keinen Teil einer selben Applikation ausbilden.

52. Anfrage-Anwender nach einem der Ansprüche 42 bis 51, welcher dazu angepasst ist, mit einer Server-Datenverarbeitung Vorrichtung zu kommunizieren, welche das erste und zweite Applikationsmodul (12) ausführt.

53. Anfrage-Anwender nach einem der Ansprüche 42 bis 52, welcher dazu angepasst ist, mit einer ersten Server-Einheit, welche das erste Applikationsmodul (10) ausführt, und mit einer zweiten Server-Einheit, welche das zweite Applikationsmodul (12) ausführt, zu kommunizieren.

## Revendications

1. Procédé pour rediriger des requêtes client au niveau d'une unité serveur, comprenant :
la réception d'une requête client au niveau d'un premier module d'application (10) provenant d'un gestionnaire de requêtes ;
la génération d'une première instruction de redirection basée sur la requête client ;
la transmission de la première instruction de redirection pour ordonner au gestionnaire de requêtes (11) de transmettre au moins une partie de la requête client à un deuxième module d'application (12) pour prendre en charge la au moins une partie de la requête client.

2. Procédé selon la revendication 1, comprenant
la sélection du deuxième module d'application pour prendre en charge la requête client sur la base des modules d'application disponibles ; et
l'ajout d'une information d'adresse à la première instruction de redirection du deuxième module d'application pour prendre en charge la requête client.

3. Procédé selon la revendication 1 ou 2, dans lequel
la requête client est reçue du gestionnaire de requêtes (11), le gestionnaire de requêtes transférant la requête client d'une unité client (13) au premier module d'application (10) ; et
la première instruction de redirection inclut une information spécifiant que le gestionnaire de requêtes est sélectionné pour rediriger la requête client vers le deuxième module d'application (12).

4. Procédé selon l'une des revendications précédentes, dans lequel la requête client inclut un localisateur de ressource interne précédemment transmis du premier module d'application (10) à l'unité client (13) et spécifiant une ressource demandée, le localisateur de ressource interne étant valide dans une communication entre le premier module d'application et l'unité client.

5. Procédé selon l'une des revendications précédentes, dans lequel la génération de la première instruction de redirection comprend :
l'obtention d'un localisateur de ressource externe basé sur le localisateur de ressource interne, le localisateur de ressource externe permettant au deuxième module d'application d'accéder à la ressource ; et
l'inclusion du localisateur de ressource externe dans la première instruction de redirection.

6. Procédé selon l'une des revendications précédentes, dans lequel la génération de la première instruction de redirection comprend une opération de recherche dans une table de localisateurs de ressources associant des localisateurs de ressource interne et des localisateurs de ressource externe au moins utilisée par le deuxième module d'application, le localisateur de ressource interne constituant une adresse pour l'indexation dans la table de localisateurs de ressources pour identifier le localisateur de ressource externe.

7. Procédé selon l'une des revendications précédentes, dans lequel l'instruction de redirection ordonne au gestionnaire de requêtes de modifier la requête client sur la base de l'information incluse dans l'instruction de redirection.

8. Procédé selon la revendication 5, dans lequel
l'instruction de redirection ordonne au gestionnaire de requêtes de modifier la requête client sur la base de l'information incluse dans l'instruction de redirection ; et
dans lequel la modification de la requête client comprend au moins un entre :
le remplacement du localisateur de ressource interne par le localisateur de ressource externe ; et
l'inclusion de l'information d'adresse du deuxième module d'application dans la requête client devant être transférée au module d'application secondaire.

9. Procédé selon l'une des revendications précédentes, dans lequel
la première instruction de redirection est générée sur la base d'une première partie de la requête client, et
une deuxième partie de la requête client est prise en charge par le premier module d'application.

10. Procédé selon l'une des revendications précédentes, comprenant
la détermination d'un troisième module d'application pour prendre en charge une troisième partie de la requête client ;
la génération d'une seconde instruction de redirection basée sur la troisième partie de la requête client ; et
la transmission de la seconde instruction de redirection au gestionnaire de requêtes, ordonnant au gestionnaire de requêtes de transmettre une requête client modifiée au troisième module d'application.

11. Procédé selon l'une des revendications précédentes, dans lequel le premier et le deuxième module d'application (12) sont exécutés sur une unité serveur unique.

12. Procédé selon l'une de revendications 1 à 10, dans lequel
le premier module d'application (10) est exécuté sur une première unité serveur ;
le deuxième d'application (12) est exécuté sur une seconde unité serveur distante de la première unité serveur ; et
le gestionnaire de requêtes (11) est constitué par un dispositif de traitement de données incluant en outre des fonctions d'au moins un entre un équilibreur de charge et un pare-feu.

13. Procédé pour rediriger des requêtes client au niveau d'un gestionnaire de requêtes, comprenant :
la réception au niveau du gestionnaire de requêtes (11) d'une requête client provenant d'une unité client (13) ;
le transfert de la requête client à un premier module d'application (10); la réception d'une première instruction de redirection provenant du premier module d'application (10) ; et
le transfert d'au moins une partie de la requête client à un deuxième module d'application (12).

14. Procédé selon la revendication 13, comprenant le transfert d'une réponse à la requête client du deuxième module d'application (12) à l'unité client (13).

15. Procédé selon l'une des revendications 13 ou 14, dans lequel la première instruction de redirection inclut une information d'adresse du deuxième modulé d'application (12) et une information spécifiant que le gestionnaire de requêtes (11) est sélectionné pour transmettre la première instruction de redirection au deuxième module d'application (12).

16. Procédé selon l'une des revendications 13 à 15, dans lequel la requête client inclut un localisateur de ressource interne précédemment transmis du premier module d'application (10) à l'unité client (13) et spécifiant une ressource demandée, le localisateur de ressource interne étant valide dans une communication entre le premier module d'application (10) et l'unité client.

17. Procédé selon l'une des revendications 13 à 16, dans lequel la première instruction de redirection inclut un localisateur de ressource externe associé au localisateur de ressource interne, le localisateur de ressource externe permettant au deuxième module d'application (12) d'accéder à la ressource.

18. Procédé selon l'une des revendications 13 à 17, dans lequel le gestionnaire de requêtes (11) sauvegarde de manière intermédiaire et modifie la requête client sur la base de l'information incluse dans l'instruction de redirection.

19. Procédé selon la revendication 18, dans lequel la modification de la requête client comprend au moins un entre :
le remplacement du localisateur de ressource interne par le localisateur de ressource externe; et
l'inclusion de l'information d'adresse du deuxième module d'application (12) dans la requête client.

20. Procédé selon l'une des revendications 13 à 19, dans lequel
la première requête de redirection est associée à une première partie de la requête client, et
une seconde partie de la requête client est prise en charge par le premier module d'application (10) en transmettant une réponse à l'unité client (13) par l'intermédiaire du gestionnaire de requêtes (11).

21. Procédé selon l'une des revendications 13 à 20, comprenant
la réception d'une troisième requête de redirection basée sur une troisième partie de la requête client ; et
la transmission de la troisième requête de redirection à un troisième module d'application pour prendre en charge la troisième requête de redirection.

22. Procédé selon l'une des revendications 13 à 21, comprenant
la détermination du deuxième module d'application (12) pour prendre en charge la requête client, si le premier module d'application (10) et le deuxième module d'application (12) ne font pas partie d'une même application.

23. Procédé selon l'une des revendications 13 à 22, dans lequel le gestionnaire de requêtes (11) communique avec une unité serveur exécutant le premier et le deuxième module d'application (12).

24. Procédé selon l'une des revendications 13 à 23, dans lequel le gestionnaire de requêtes (11) communique avec une première unité serveur exécutant le premier module d'application (10) et avec une seconde unité serveur exécutant le deuxième module d'application (12).

25. Procédé selon l'une des revendications 13 à 24, comprenant une pluralité de gestionnaires de requêtes (11), dans lequel chaque gestionnaire de requêtes (11) exécute en outre des fonctions d'au moins un entre un équilibreur de charge et un pare-feu.

26. Procédé selon l'une des revendications précédentes, dans lequel la requête client inclut au moins un de :
une pluralité de localisateurs de ressource interne ; et
une pluralité de localisateurs de ressource externe.

27. Procédé selon l'une des revendications précédentes, dans lequel
les modules d'application sont constitués par des servlets Java ; et
le deuxième localisateur de ressources inclut une URL.

28. Support lisible par ordinateur, dans lequel un programme est incorporé, où le programme fait exécuter à un ordinateur le procédé selon l'une des revendications 1 à 27.

29. Produit de programme informatique comprenant le support lisible par ordinateur selon la revendication 28.

30. Unité serveur pour rediriger des requêtes client incluant un premier module d'application (10) ayant
des moyens de réception de module d'application (101) pour recevoir une requête client ;
des moyens de redirection de module d'application (102) pour générer une première instruction de redirection basée sur la requête client ;
des moyens de transmission de module d'application (103) pour transmettre la première instruction de redirection à un gestionnaire de requêtes (11), ordonnant au gestionnaire de requêtes (11) de transmettre au moins une partie de la requête client à un deuxième module d'application (12) pour prendre en charge la au moins une partie de la requête client.

31. Unité serveur selon la revendication 30, dans laquelle les moyens de redirection de module d'application (102) sont adaptés pour sélectionner le deuxième module d'application (12) pour prendre en charge la requête client sur la base des modules d'application disponibles et pour ajouter à l'instruction de redirection une information d'adresse du deuxième module d'application (12).

32. Unité serveur selon la revendication 30 ou 31, dans laquelle
les moyens de réception de module d'application (101) sont adaptés pour recevoir la requête client provenant du gestionnaire de requêtes (11), le gestionnaire de requêtes (11) transférant la requête client de l'unité client (13) au premier module d'application (10) ; et
les moyens de redirection de module d'application (102) sont adaptés pour inclure dans la première instruction de redirection une information spécifiant que le gestionnaire de requêtes (11) est sélectionné pour rediriger la requête client vers le deuxième module d'application (12).

33. Unité serveur selon l'une des revendications 30 à 32, dans laquelle la requête client inclut un localisateur de ressource interne précédemment transmis du premier module d'application (10) à l'unité client (13) et spécifiant une ressource demandée, le localisateur de ressource interne étant valide dans une communication entre le premier module d'application (10) et l'unité client (13).

34. Unité serveur selon l'une des revendications 30 à 33, dans laquelle les moyens de redirection de module d'application (102) sont adaptés pour obtenir un localisateur de ressource externe basé sur le localisateur de ressource interne, le localisateur de ressource externe permettant au deuxième module d'application (12) d'accéder à la ressource et d'inclure le localisateur de ressource externe dans la première instruction de redirection.

35. Unité serveur selon l'une des revendications 30 à 34, dans laquelle les moyens de redirection de module d'application (102) sont adaptés pour effectuer une opération de recherche dans une table de localisateurs de ressources associant des localisateurs de ressource interne et des localisateurs de ressource externe au moins utilisée par le deuxième module d'application (12), le premier localisateur de ressources constituant une adresse pour l'indexation dans la table de localisateurs de ressources pour identifier le second localisateur de ressources.

36. Unité serveur selon l'une des revendications 30 à 35, dans laquelle les moyens de redirection de module d'application (102) sont adaptés pour ordonner au gestionnaire de requêtes (11) de modifier la requête client sur la base de l'information incluse dans l'instruction de redirection.

37. Unité serveur selon la revendication 34, dans laquelle
les moyens de redirection de module d'application (102) sont adaptés pour ordonner au gestionnaire de requêtes (11) de modifier la requête client sur la base de l'information incluse dans l'instruction de redirection ; et
les moyens de redirection de module d'application (102) sont adaptés pour ordonner au gestionnaire de requêtes (11) d'effectuer au moins une des actions entre :
remplacer le localisateur de ressource interne par le localisateur de ressource externe ; et
inclure l'information d'adresse du deuxième module d'application (12) dans la requête client.

38. Unité serveur selon l'une des revendications 30 à 37, dans laquelle les moyens de redirection de module d'application (102) sont adaptés pour générer la première instruction de redirection basée sur une première partie de la requête client, et dans laquelle le premier module d'application (10) prend en charge une deuxième partie de la requête client.

39. Unité serveur selon l'une des revendications 30 à 38, dans laquelle
les moyens de redirection de module d'application (102) sont adaptés pour déterminer un troisième module d'application pour prendre en charge une troisième partie de la requête client et pour générer une seconde instruction de redirection basée sur la troisième partie de la requête client ; et
les moyens de transmission de module d'application sont adaptés pour transmettre la seconde instruction de redirection au gestionnaire de requêtes (11), ordonnant au gestionnaire de requêtes (11) de transmettre une requête client modifiée au troisième module d'application.

40. Unité serveur selon l'une des revendications 30 à 39, adaptée pour exécuter le premier et le deuxième module d'application (12).

41. Unité serveur selon l'une des revendications 30 à 39, adaptée pour exécuter le premier module d'application (10), et dans laquelle le deuxième module d'application (12) est exécuté sur une seconde unité serveur distante de la première unité serveur.

42. Gestionnaire de requêtes pour rediriger des requêtes client comprenant :
des moyens de réception de gestionnaire de requêtes (110) pour recevoir une requête client provenant d'une unité client (13) ;
des moyens de transmission de gestionnaire de requêtes (111) pour transférer la requête client à un premier module d'application (10) ;
dans lequel les moyens de réception de gestionnaire de requêtes sont adaptés pour recevoir une première instruction de redirection provenant du premier module d'application (10) ; et
les moyens de transmission de gestionnaire de requêtes sont adaptés pour transférer au moins une partie de la requête client à un deuxième module d'application (12).

43. Gestionnaire de requêtes selon la revendication 42, dans lequel les moyens de transmission de gestionnaire de requêtes sont adaptés pour transférer une réponse à la requête client du deuxième module d'application (12) à l'unité client (13).

44. Gestionnaire de requêtes selon l'une des revendications 42 ou 43, dans lequel la première instruction de redirection inclut une information d'adresse du deuxième module d'application (12) et une information spécifiant que le gestionnaire de requêtes est sélectionné pour transmettre la première instruction de redirection au deuxième module d'application (12).

45. Gestionnaire de requêtes selon l'une des revendications 42 à 44, dans lequel la requête client inclut un localisateur de ressource interne précédemment transmis du premier module d'application (10) à l'unité client (13) et spécifiant une ressource demandée, le localisateur de ressource interne étant valide dans une communication entre le premier module d'application (10) et l'unité client (13).

46. Gestionnaire de requêtes selon l'une des revendications 42 à 45, dans lequel la première instruction de redirection inclut un localisateur de ressource externe associé au localisateur de ressource interne, le localisateur de ressource externe permettant au deuxième module d'application (12) d'accéder à la ressource.

47. Gestionnaire de requêtes selon l'une des revendications 42 à 46, comprenant
des moyens de stockage pour stocker de manière intermédiaire la requête client ; et
dans lequel les moyens de transmission de gestionnaire de requêtes (111) sont adaptés pour modifier la requête client sur la base de l'information incluse dans l'instruction de redirection.

48. Gestionnaire de requêtes selon la revendication 47, dans lequel les moyens de transmission de gestionnaire de requêtes (111) sont adaptés pour effectuer au moins une des actions entre :
remplacer le localisateur de ressource interne par le localisateur de ressource externe ; et
inclure l'information d'adresse du deuxième module d'application (12) dans la requête client.

49. Gestionnaire de requêtes selon l'une des revendications 42 à 48, dans lequel
la première requête de redirection est associée à une première partie de la requête client, et
une seconde partie de la requête client est prise en charge par le premier module d'application (10) en transmettant une réponse à l'unité client (13) par l'intermédiaire du gestionnaire de requêtes.

50. Gestionnaire de requêtes selon l'une des revendications 42 à 49, dans lequel
les moyens de réception de gestionnaire de requêtes (110) sont adaptés pour recevoir une troisième requête de redirection basée sur une troisième partie de la requête client ; et
les moyens de transmission de gestionnaire de requêtes (111) sont adaptés pour transmettre la troisième requête de redirection à un troisième module d'application pour prendre en charge la troisième requête de redirection.

51. Gestionnaire de requêtes selon l'une des revendications 42 à 50, comprenant des moyens de détermination de gestionnaire de requêtes pour déterminer un deuxième module d'application (12) pour prendre en charge la requête client, si le premier module d'application (10) et le deuxième module d'application (12) ne font pas partie d'une même application.

52. Gestionnaire de requêtes selon l'une des revendications 42 à 51, adapté pour communiquer avec un dispositif de traitement de données de serveur exécutant le premier et le deuxième module d'application (12).

53. Gestionnaire de requêtes selon l'une des revendications 42 à 52, adapté pour communiquer avec une première unité serveur exécutant le premier module d'application (10) et avec une seconde unité serveur exécutant le deuxième module d'application (12).
